# EUROPEAN PATENT APPLICATION

(11) **EP 4 383 602 A1**
(43) Date of publication of application: **12.06.2024**
(21) Application number: 22853564.7
(22) Date of filing: 05.08.2022
(51) Int. Cl.: H04L 1/00, H04L 1/18, H04L 5/00, H04W 24/10, H04W 72/12

(54) **METHOD, USER EQUIPMENT, PROCESSING DEVICE, AND STORAGE MEDIUM FOR TRANSMISSION OF CHANNEL STATE INFORMATION REPORTING, AND METHOD AND BASE STATION FOR RECEPTION OF CHANNEL STATE INFORMATION REPORTING**

(30) Priority: 06.08.2021 KR 20210103925
(71) Applicant: LG Electronics Inc., Yeongdeungpo-gu Seoul 07336 (KR)
(72) Inventor: BAE, Duckhyun, Seoul 06772 (KR); YANG, Suckchel, Seoul 06772 (KR); KIM, Seonwook, Seoul 06772 (KR)
(74) Representative: Plasseraud IP
(86) International application number: PCT/KR2022/011701
(87) International publication number: WO 2023/014189

(57) **Abstract**

A UE comprises: receiving an upper-layer parameter configuration related to CSI reporting; receiving scheduling information including resource allocation information for a PDSCH; receiving the PDSCH on the basis of the scheduling information; determining an uplink resource for the CSI reporting on the basis of the upper-layer parameter configuration and the scheduling information; and transmitting the CSI reporting in the uplink resource. The transmission of the CSI reporting in the uplink resource comprises transmitting, on the basis of a modulation and coding scheme (MCS) offset table including i) the PDSCH and ii) multiple entry values, one of the multiple entry values via the CSI reporting, wherein the multiple entry values comprise first values representing multiple MCS offsets and a second value which has failed to be mapped to an MCS offset and suspended.

## Description

### TECHNICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

### DISCLOSURE

### Technical Problem

As new radio communication technology has been introduced, the number of UEs to which a BS should provide services in a prescribed resource region is increasing and the volume of data and control information that the BS transmits/receives to/from the UEs to which the BS provides services is also increasing. Since the amount of resources available to the BS for communication with the UE(s) is limited, a new method for the BS to efficiently receive/transmit uplink/downlink data and/or uplink/downlink control information from/to the UE(s) using the limited radio resources is needed. In other words, due to increase in the density of nodes and/or the density of UEs, a method for efficiently using high-density nodes or high-density UEs for communication is needed.

A method to efficiently support various services with different requirements in a wireless communication system is also needed.

Overcoming delay or latency is an important challenge to applications, performance of which is sensitive to delay/latency.

To support new services (e.g., URLLC), there is a need for a method of providing channel state information to a BS more quickly and with higher reliability.

According to some implementations of the present disclosure, there is a method of preventing the UE and the BS from making different determinations about triggering MCS index reporting.

According to some implementations of the present disclosure, the BS may assume a fixed length and decode a CSI reporting sequence, thereby reducing decoding complexity of the BS.

The objects to be achieved with the present disclosure are not limited to what has been particularly described hereinabove and other objects not described herein will be more clearly understood by persons skilled in the art from the following detailed description.

### Technical Solution

According to an aspect of the present disclosure, a method of transmitting a channel state information (CSI) report by a user equipment (UE) in a wireless communication system is provided. The method includes receiving a higher layer parameter configuration related to CSI reporting, receiving scheduling information including resource allocation information for a physical downlink shared channel (PDSCH), receiving the PDSCH based on the scheduling information, determining an uplink resource for the CSI report based on the higher layer parameter configuration and the scheduling information, and transmitting the CSI report in the uplink resource. Transmitting the CSI report in the uplink resource includes transmitting the CSI report including one of a plurality of entry values based on i) the PDSCH and ii) a modulation coding scheme (MCS) offset table including the plurality of entry values, and the plurality of entry values includes first values representing a plurality of MCS offset values and a second value that is reserved without being mapped to any MCS offset.

According to another aspect of the present disclosure, a user equipment (UE) for transmitting a channel state information (CSI) report in a wireless communication system is provided. The UE includes at least one transceiver, at least one processor, and at least one computer memory operatively connected to the at least one processor and configured to store instructions that when executed causes the at least one processor to perform operations. The operations include receiving a higher layer parameter configuration related to CSI reporting, receiving scheduling information including resource allocation information for a physical downlink shared channel (PDSCH), receiving the PDSCH based on the scheduling information, determining an uplink resource for the CSI report based on the higher layer parameter configuration and the scheduling information, and transmitting the CSI report in the uplink resource. Transmitting the CSI report in the uplink resource includes transmitting the CSI report including one of a plurality of entry values based on i) the PDSCH and ii) a modulation coding scheme (MCS) offset table including the plurality of entry values, and the plurality of entry values includes first values representing a plurality of MCS offset values and a second value that is reserved without being mapped to any MCS offset.

According to another aspect of the present disclosure, a processing device in a wireless communication system is provided. The processing device includes at least one processor, and at least one computer memory operatively connected to the at least one processor and configured to store instructions that when executed causes the at least one processor to perform operations. The operations include receiving a higher layer parameter configuration related to channel state information (CSI) reporting, receiving scheduling information including resource allocation information for a physical downlink shared channel (PDSCH), receiving the PDSCH based on the scheduling information, determining an uplink resource for the CSI report based on the higher layer parameter configuration and the scheduling information, and transmitting the CSI report in the uplink resource. Transmitting the CSI report in the uplink resource includes transmitting the CSI report including one of a plurality of entry values based on i) the PDSCH and ii) a modulation coding scheme (MCS) offset table including the plurality of entry values, and the plurality of entry values includes first values representing a plurality of MCS offset values and a second value that is reserved without being mapped to any MCS offset.

According to another aspect of the present disclosure, a computer readable storage medium is provided. The computer readable storage medium stores at least one program including instructions that when executed causes the at least one processor to perform operations. The operations include receiving a higher layer parameter configuration related to channel state information (CSI) reporting, receiving scheduling information including resource allocation information for a physical downlink shared channel (PDSCH), receiving the PDSCH based on the scheduling information, determining an uplink resource for the CSI report based on the higher layer parameter configuration and the scheduling information, and transmitting the CSI report in the uplink resource. Transmitting the CSI report in the uplink resource includes transmitting the CSI report including one of a plurality of entry values based on i) the PDSCH and ii) a modulation coding scheme (MCS) offset table including the plurality of entry values, and the plurality of entry values includes first values representing a plurality of MCS offset values and a second value that is reserved without being mapped to any MCS offset.

According to another aspect of the present disclosure, a computer program stored in a computer readable storage medium is provided. The computer program includes at least one program code including instructions that when executed causes the at least one processor to perform operations, the operations including receiving a higher layer parameter configuration related to channel state information (CSI) reporting, receiving scheduling information including resource allocation information for a physical downlink shared channel (PDSCH), receiving the PDSCH based on the scheduling information, determining an uplink resource for the CSI report based on the higher layer parameter configuration and the scheduling information, and transmitting the CSI report in the uplink resource. Transmitting the CSI report in the uplink resource includes transmitting the CSI report including one of a plurality of entry values based on i) the PDSCH and ii) a modulation coding scheme (MCS) offset table including the plurality of entry values, and the plurality of entry values includes first values representing a plurality of MCS offset values and a second value that is reserved without being mapped to any MCS offset.

According to another aspect of the present disclosure, a method of receiving a channel state information (CSI) report by a base station (BS) in a wireless communication system is provided. The method includes transmitting a higher layer parameter configuration related to CSI reporting, transmitting scheduling information including resource allocation information for a physical downlink shared channel (PDSCH), transmitting the PDSCH based on the scheduling information, determining an uplink resource for the CSI report based on the higher layer parameter configuration and the scheduling information, and receiving the CSI report in the uplink resource. The CSI report includes one of the plurality of entry values based on i) the PDSCH and ii) a modulation coding scheme (MCS) offset table including the plurality of entry values, and the plurality of entry values includes first values representing a plurality of MCS offset values and a second value that is reserved without being mapped to any MCS offset.

According to another aspect of the present disclosure, a base station (BS) for receiving a channel state information (CSI) report in a wireless communication system is provided. The BS includes at least one transceiver, at least one processor, and at least one computer memory operatively connected to the at least one processor and configured to store instructions that when executed causes the at least one processor to perform operations. The operations include transmitting a higher layer parameter configuration related to CSI reporting, transmitting scheduling information including resource allocation information for a physical downlink shared channel (PDSCH), transmitting the PDSCH based on the scheduling information, determining an uplink resource for the CSI report based on the higher layer parameter configuration and the scheduling information, and receiving the CSI report in the uplink resource. The CSI report includes one of the plurality of entry values based on i) the PDSCH and ii) a modulation coding scheme (MCS) offset table including the plurality of entry values, and the plurality of entry values includes first values representing a plurality of MCS offset values and a second value that is reserved without being mapped to any MCS offset.

According to each aspect of the present disclosure, the method or the operations may further include determining whether an MCS offset is included in the CSI report. Based on a determination that the MCS offset is included in the CSI report, the CSI report may include one of the first values as the entry value. Based on a determination that the MCS offset is not included in the CSI report, the CSI report may include the second value as the entry value.

According to each aspect of the present disclosure, determining whether the MCS offset is included in the CSI report may include determining whether the entry value is included in the CSI report based on a radio network temporary identifier (RNTI) related to the scheduling information.

According to each aspect of the present disclosure, determining whether the MCS offset is included in the CSI report may include determining whether the entry value is included in the CSI report based on decoding failure or success for the PDSCH.

According to each aspect of the present disclosure, the method or the operations may further include determining an MCS offset based on the PDSCH and an MCS index table for the PDSCH.

According to each aspect of the present disclosure, the MCS offset may be calculated from differences between a largest MCS index I_{MCS,target} that makes a block error ratio (BLER) estimated for a transport block from the PDSCH to equal to or less than a BLER target and an MCS index I_{MCS} of the transport block included in the PDSCH.

According to each aspect of the present disclosure, the MCS index table may be predetermined for a downlink control information format related to the scheduling information.

The foregoing solutions are merely a part of the examples of the present disclosure and various examples into which the technical features of the present disclosure are incorporated may be derived and understood by persons skilled in the art from the following detailed description.

### Advantageous Effects

According to some implementations of the present disclosure, a wireless communication signal may be efficiently transmitted/received. Accordingly, the total throughput of a wireless communication system may be raised.

According to some implementations of the present disclosure, various services with different requirements may be efficiently supported in a wireless communication system.

According to some implementations of the present disclosure, delay/latency generated during radio communication between communication devices may be reduced.

According to some implementations of the present disclosure, a user equipment (UE) may perform CSI reporting without separate CSI measurement and a base station (BS) may also obtain CSI of the UE without separate CSI-RS transmission.

According to some implementations of the present disclosure, it may be possible to prevent the UE and the BS from making different determinations about triggering MCS index reporting.

According to some implementations of the present disclosure, a user equipment (UE) may use less information for CSI reporting, and thus, the BS may achieve the same level of reliability using fewer radio resources, which may assist in conserving overall uplink system resources.

### BRIEF DESCRIPTION OF THE DRAWINGS

The accompanying drawings, which are included to provide a further understanding of the present disclosure, illustrate examples of implementations of the present disclosure and together with the detailed description serve to explain implementations of the present disclosure:
FIG. 1 illustrates an example of a communication system 1 to which implementations of the present disclosure are applied;
FIG. 2 is a block diagram illustrating examples of communication devices capable of performing a method according to the present disclosure;
FIG. 3 illustrates another example of a wireless device capable of performing implementation(s) of the present disclosure;
FIG. 4 illustrates an example of a frame structure used in a 3rd generation partnership project (3GPP)-based wireless communication system;
FIG. 5 illustrates a resource grid of a slot;

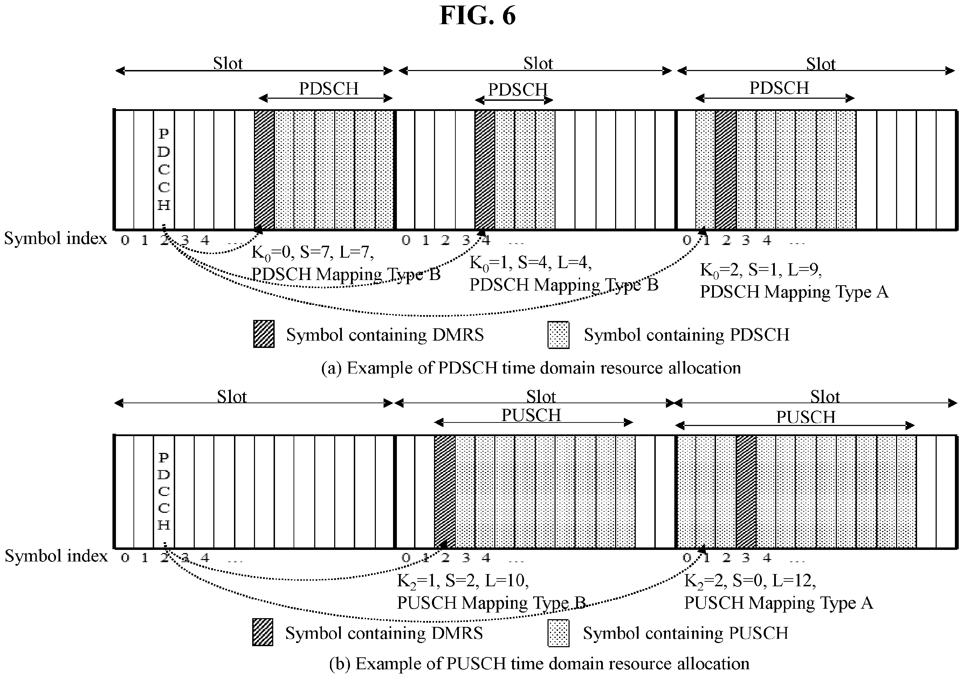

FIG. 6 illustrates an example of physical downlink shared channel (PDSCH) time domain resource assignment (TDRA) caused by a physical downlink control channel (PDCCH) and an example of physical uplink shared channel (PUSCH) TDRA caused by the PDCCH;
FIG. 7 illustrates an HARQ-ACK transmission/reception procedure;
FIG. 8 illustrates a UE operation flow according to some implementations of the present disclosure; and
FIG. 9 illustrates a BS operation flow according to some implementations of the present disclosure.

### DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

In a dual connectivity (DC) operation, the term special cell (SpCell) refers to a Pcell of a master cell group (MCG) or a primary secondary cell (PSCell) of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes the PSCell and 0 or more Scells. The PSCell is a primary Scell of the SCG. For a UE in RRC_CONNECTED state, that is not configured with CA or DC, only one serving cell including only the Pcell is present. For a UE in RRC_CONNECTED state, that is configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

For a UE that is configured with CA and is not configured with DC, a Pcell PUCCH group (also called a primary PUCCH group) including the Pcell and 0 or more Scells and an Scell PUCCH group (also called a secondary PUCCH group) including only Scell(s) may be configured. For the Scell, an Scell on which a PUCCH associated with the corresponding cell is transmitted (hereinafter, a PUCCH cell) may be configured. An Scell for which a PUCCH Scell is indicated belongs to the Scell PUCCH group (i.e., the secondary PUCCH group) and PUCCH transmission of related uplink control information (UCI) is performed on the PUCCH Scell. If a PUCCH Scell is not indicated for an Scell or a cell which is indicated for PUCCH transmission for the Scell is a Pcell, the Scell belongs to the Pcell PUCCH group (i.e., the primary PUCCH group) and PUCCH transmission of related UCI is performed on the Pcell. Hereinbelow, if the UE is configured with the SCG and some implementations of the present disclosure related to a PUCCH are applied to the SCG, the primary cell may refer to the PSCell of the SCG. If the UE is configured with the PUCCH Scell and some implementations of the present disclosure related to the PUCCH are applied to the secondary PUCCH group, the primary cell may refer to the PUCCH Scell of the secondary PUCCH group.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal (SS) are defined as the DL physical signals. The RS, which is also referred to as a pilot, represents a signal with a predefined special waveform known to both the BS and the UE. For example, a demodulation reference signal (DMRS), a channel state information RS (CSI-RS), etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, a PDCCH refers to a set of time-frequency resources (e.g., resource elements (REs)) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUCCH/PUSCH/PRACH" is used as the same meaning that the UE transmits/receives the UCI/UL data/random access signals on or through the PUCCH/PUSCH/PRACH, respectively. In addition, "the BS transmits/receives a PBCH/PDCCH/PDSCH" is used as the same meaning that the BS transmits the broadcast information/DCI/DL data on or through a PBCH/PDCCH/PDSCH, respectively.

In the present disclosure, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives a synchronization signal block (SSB), DMRS, CSI-RS, PBCH, PDCCH, PDSCH, PUSCH, and/or PUCCH in the form of radio signals on a cell, the communication device may not select and receive radio signals including only a specific physical channel or a specific physical signal through a radio frequency (RF) receiver, or may not select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, reception of physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to as a new RAT (NR) or fifth-generation (5G) RAT, and a system using NR or supporting NR is referred to as an NR system.

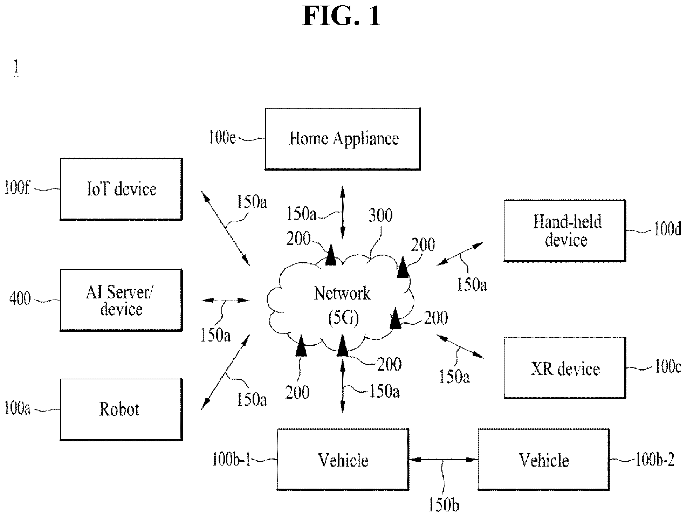

FIG. 1 illustrates an example of a communication system 1 to which implementations of the present disclosure are applied. Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/SG devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless device may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

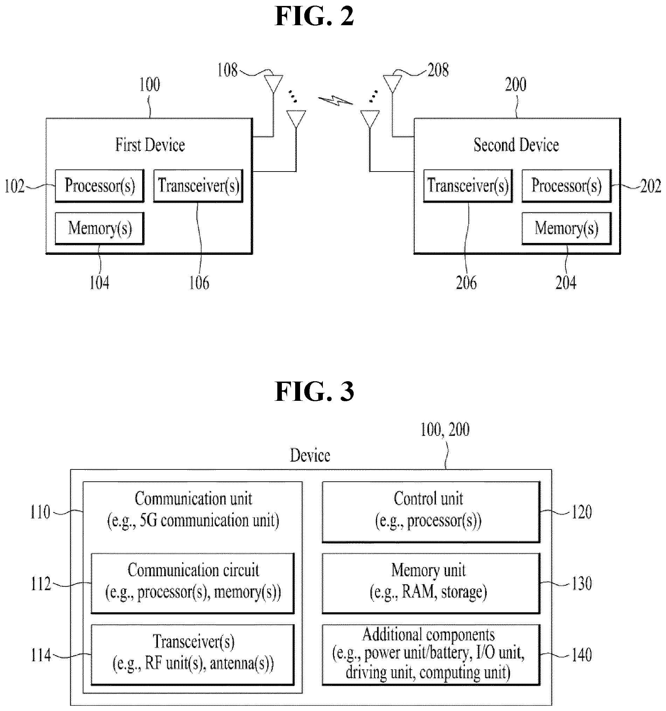

FIG. 2 is a block diagram illustrating examples of communication devices capable of performing a method according to the present disclosure. Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the below-described/proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

The wireless communication technology implemented in the wireless devices 100 and 200 of the present disclosure may include narrowband Internet of things for low-power communication as well as LTE, NR, and 6G. For example, the NB-IoT technology may be an example of low-power wide-area network (LPWAN) technologies and implemented in standards such as LTE Cat NB1 and/or LTE Cat NB2. However, the NB-IoT technology is not limited to the above names. Additionally or alternatively, the wireless communication technology implemented in the wireless devices XXX and YYY of the present disclosure may perform communication based on the LTE-M technology. For example, the LTE-M technology may be an example of LPWAN technologies and called by various names including enhanced machine type communication (eMTC). For example, the LTE-M technology may be implemented in at least one of the following various standards: 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, etc., but the LTE-M technology is not limited to the above names. Additionally or alternatively, the wireless communication technology implemented in the wireless devices XXX and YYY of the present disclosure may include at least one of ZigBee, Bluetooth, and LPWAN in consideration of low-power communication, but the wireless communication technology is not limited to the above names. For example, the ZigBee technology may create a personal area network (PAN) related to small/low-power digital communication based on various standards such as IEEE 802.15.4 and so on, and the ZigBee technology may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a transitory memory, a non-transitory memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable (non-transitory) storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

In the present disclosure, a computer program may include program code stored on at least one computer-readable (non-transitory) storage medium and, when executed, configured to perform operations according to some implementations of the present disclosure or cause at least one processor to perform the operations according to some implementations of the present disclosure. The computer program may be provided in the form of a computer program product. The computer program product may include at least one computer-readable (non-transitory) storage medium.

A communication device of the present disclosure includes at least one processor; and at least one computer memory operably connected to the at least one processor and configured to store instructions for causing, when executed, the at least one processor to perform operations according to example(s) of the present disclosure described later.

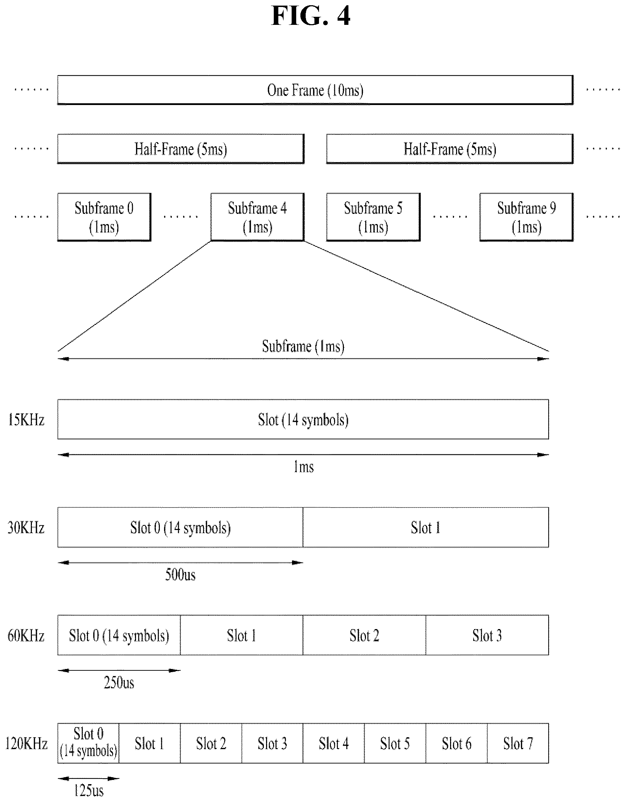

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of T_{f} = (△fₘₐₓ*N_{f}/100)*T_{c} = 10 ms and is divided into two half-frames of 5 ms each. A basic time unit for NR is T_{c} = 1/(△fₘₐₓ*N_{f}) where △fₘₐₓ = 480*10³ Hz and N_{f} = 4096. For reference, a basic time unit for LTE is Tₛ = 1/(△f_{ref}*N_{f,ref}) where △f_{ref} = 15*10³ Hz and N_{f,ref}= 2048. T_{c} and Tf have the relationship of a constant κ = T_{c}/T_{f} = 64. Each half-frame includes 5 subframes and a duration T_{sf} of a single subframe is 1 ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing △f = 2^{u}*15 kHz. The table below shows the number of OFDM symbols (*N*^{slot}_{symb}) per slot, the number of slots (*N*^{frame,u}ₛₗₒₜ) per frame, and the number of slots (*N*^{subframe,u}ₛₗₒₜ) per subframe.

**Table 1**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The table below shows the number of OFDM symbols per slot, the number of slots per frame, and the number of slots per subframe, according to the subcarrier spacing Δf = 2^{u*}15 kHz.

**Table 2**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

For a subcarrier spacing configuration u, slots may be indexed within a subframe in ascending order as follows: n^{u}ₛ ∈ {0, ..., n^{subframe,u}ₛₗₒₜ - 1} and indexed within a frame in ascending order as follows: n^{u}_{s,f} ∈ {0, ..., n^{frame,u}ₛₗₒₜ - 1}.

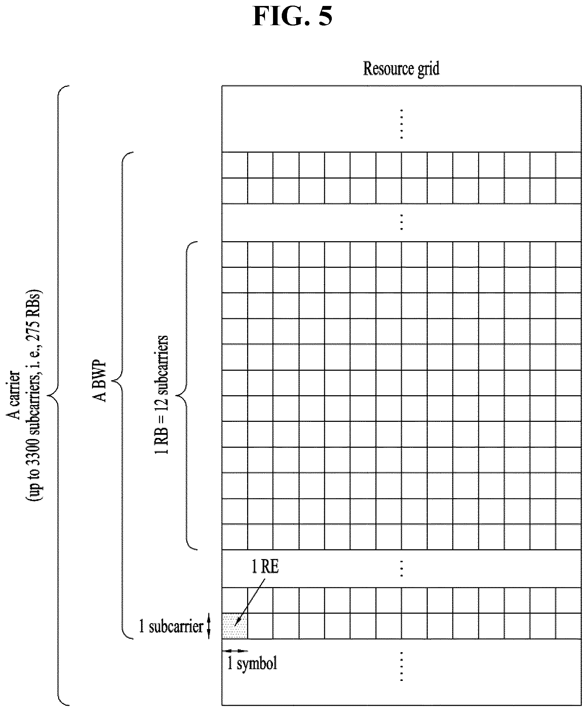

FIG. 5 illustrates a resource grid of a slot. The slot includes multiple (e.g., 14 or 12) symbols in the time domain. For each numerology (e.g., subcarrier spacing) and carrier, a resource grid of *N*^{size,u}_{grid,x}**N*^{RB}_{sc} subcarriers and *N*^{subframe,u}_{symb} OFDM symbols is defined, starting at a common resource block (CRB) N^{start,u}_{grid} indicated by higher layer signaling (e.g., RRC signaling), where *N*^{size,u}_{grad,x} is the number of resource blocks (RBs) in the resource grid and the subscript x is DL for downlink and UL for uplink. *N*^{RB}_{sc} is the number of subcarriers per RB. In the 3GPP-based wireless communication system, *N*^{RB}_{sc} is typically 12. There is one resource grid for a given antenna port *p,* a subcarrier spacing configuration *u*, and a transmission link (DL or UL). The carrier bandwidth *N*^{size,u}_{grid} for the subcarrier spacing configuration *u* is given to the UE by a higher layer parameter (e.g., RRC parameter). Each element in the resource grid for the antenna port *p* and the subcarrier spacing configuration *u* is referred to as a resource element (RE) and one complex symbol may be mapped to each RE. Each RE in the resource grid is uniquely identified by an index *k* in the frequency domain and an index *l* representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration *u*. The center of subcarrier 0 of CRB 0 for the subcarrier spacing configuration *u* is equal to 'Point A' which serves as a common reference point for RB grids. The PRBs for subcarrier spacing configuration *u* are defined within a bandwidth part (BWP) and numbered from 0 to *N*^{size,u}_{BWP,i}-1, where i is a number of the BWP. The relation between a PRB n_{PRB} in a BWP i and a CRB n^{u}_{CRB} is given by: n^{u}_{PRB} = n^{u}_{CRB} + *N*^{size,u}_{BWP,i}, where *N*^{size}_{BWP,i} is a CRB in which the BWP starts relative to CRB 0. The BWP includes a plurality of consecutive RBs in the frequency domain. For example, the BWP may be a subset of contiguous CRBs defined for a given numerology uᵢ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in a set of DL BWPs or UL BWPs, the network may configure at least an initial DL BWP and one (if the serving cell is configured with uplink) or two (if supplementary uplink is used) initial UL BWPs. The network may configure additional UL and DL BWPs. For each DL BWP or UL BWP, the UE may be provided the following parameters for the serving cell: i) an SCS; ii) a CP; iii) a CRB *N*^{start}_{BWP} = *O*_{carrier} + *RB*ₛₜₐᵣₜ and the number of contiguous RBs *N*^{size}_{BWP} = L_{RB} provided by an RRC parameter *locationAndBandwidth,* which indicates an offset *RB*ₛₑₜ and a length *L*_{RB} as a resource indicator value (RIV) on the assumption of *N*^{start}_{BWP} = 275, and a value *O*_{carrier} provided by an RRC parameter *offsetToCarrier* for the SCS; an index in the set of DL BWPs or UL BWPs; a set of BWP-common parameters; and a set of BWP-dedicated parameters.

Virtual resource blocks (VRBs) may be defined within the BWP and indexed from 0 to *N*^{size,u}_{BWP,i}-1, where i denotes a BWP number. The VRBs may be mapped to PRBs according to non-interleaved mapping. In some implementations, VRB n may be mapped to PRB n for non-interleaved VRB-to-PRB mapping.

The UE for which carrier aggregation is configured may be configured to use one or more cells. If the UE is configured with a plurality of serving cells, the UE may be configured with one or multiple cell groups. The UE may also be configured with a plurality of cell groups associated with different BSs. Alternatively, the UE may be configured with a plurality of cell groups associated with a single BS. Each cell group of the UE includes one or more serving cells and includes a single PUCCH cell for which PUCCH resources are configured. The PUCCH cell may be a Pcell or an Scell configured as the PUCCH cell among Scells of a corresponding cell group. Each serving cell of the UE belongs to one of cell groups of the UE and does not belong to a plurality of cells.

NR frequency bands are defined as two types of frequency ranges, i.e., FR1 and FR2. FR2 is also referred to as millimeter wave (mmW). The following table shows frequency ranges within which NR may operate.

**Table 3**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

A PDSCH is a physical layer UL channel for UL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port.

A PUCCH is a physical layer UL channel for uplink control information (UCI) transmission. The PUCCH carries UCI. UCI types transmitted on the PUCCH include hybrid automatic repeat request acknowledgement (HARQ-ACK) information, a scheduling request (SR), and channel state information (CSI). UCI bits include HARQ-ACK information bits if present, SR information bits if present, link recovery request (LRR) information bits if present, and CSI bits if present. In the present disclosure, HARQ-ACK information bits correspond to a HARQ-ACK codebook. In particular, a bit sequence in which HARQ-ACK information bits are arranged according to a predetermined rule is called a HARQ-ACK codebook.
- Scheduling request (SR): Information that is used to request a UL-SCH resource.
- Hybrid automatic repeat request (HARQ) - acknowledgment (ACK): A response to a DL data packet (e.g., codeword) on the PDSCH. HARQ-ACK indicates whether the DL data packet has been successfully received by a communication device. In response to a single codeword, 1-bit HARQ-ACK may be transmitted. In response to two codewords, 2-bit HARQ-ACK may be transmitted. The HARQ-ACK response includes positive ACK (simply, ACK), negative ACK (NACK), discontinuous transmission (DTX), or NACK/DTX. Here, the term HARQ-ACK is used interchangeably with HARQ ACK/NACK, ACK/NACK, or A/N.
- Channel state information (CSI): Feedback information about a DL channel. The CSI may include channel quality information (CQI), a rank indicator (RI), a precoding matrix indicator (PMI), a CSI-RS resource indicator (CRI), an SS/PBCH resource block indicator (SSBRI), and a layer indicator (L1). The CSI may be classified into CSI part 1 and CSI part 2 according to UCI type included in the CSI. For example, the CRI, RI, and/or the CQI for the first codeword may be included in CSI part 1, and LI, PMI, and/or the CQI for the second codeword may be included in CSI part 2.
- Link recovery request (LRR)

In the present disclosure, for convenience, PUCCH resources configured/indicated for/to the UE by the BS for HARQ-ACK, SR, and CSI transmission are referred to as a HARQ-ACK PUCCH resource, an SR PUCCH resource, and a CSI PUCCH resource, respectively.

PUCCH formats may be defined as follows according to UCI payload sizes and/or transmission lengths (e.g., the number of symbols included in PUCCH resources). In regard to the PUCCH formats, reference may also be made to Table 4.

### (0) PUCCH format 0 (PF0 or F0)

- Supported UCI payload size: up to K bits (e.g., K=2)
- Number of OFDM symbols constituting a single PUCCH: 1 to X symbols (e.g., X=2)
- Transmission structure: Only a UCI signal without a DMRS is included in PUCCH format 0. The UE transmits a UCI state by selecting and transmitting one of a plurality of sequences. For example, the UE transmits specific UCI to the BS by transmitting one of a plurality of sequences through a PUCCH, which is PUCCH format 0. The UE transmits the PUCCH, which is PUCCH format 0, in PUCCH resources for a corresponding SR configuration only upon transmitting a positive SR.
- Configuration for PUCCH format 0 includes the following parameters for a corresponding PUCCH resource: an index for initial cyclic shift, the number of symbols for PUCCH transmission, and/or the first symbol for PUCCH transmission.

(1) PUCCH format 1 (PF1 or F1)
   - Supported UCI payload size: up to K bits (e.g., K=2)
   - Number of OFDM symbols constituting a single PUCCH: Y to Z symbols (e.g., Y=4 and Z=14)
   - Transmission structure: The DMRS and UCI are configured/mapped in TDM in/to different OFDM symbols. In other words, the DMRS is transmitted in symbols in which modulation symbols are not transmitted and the UCI is represented as the product between a specific sequence (e.g., orthogonal cover code (OCC)) and a modulation (e.g., QPSK) symbol. Code division multiplexing (CDM) is supported between a plurality of PUCCH resources (conforming to PUCCH format 1) (within the same RB) by applying cyclic shifts (CSs)/OCCs to both the UCI and the DMRS. PUCCH format 1 carries the UCI of up to 2 bits and the modulation symbols are spread by the OCC (differently configured depending on whether frequency hopping is performed) in the time domain.
   - Configuration for PUCCH format 1 includes the following parameters for a corresponding PUCCH resource: an index for initial cyclic shift, the number of symbols for PUCCH transmission, the first symbol for PUCCH transmission, and/or an index for the OCC.
(2) PUCCH format 2 (PF2 or F2)
   - Supported UCI payload size: more than K bits (e.g., K=2)
   - Number of OFDM symbols constituting a single PUCCH: 1 to X symbols (e.g., X=2)
   - Transmission structure: The DMRS and UCI are configured/mapped using frequency division multiplexing (FDM) within the same symbol. The UE transmits the UCI by applying only IFFT without DFT to encoded UCI bits. PUCCH format 2 carries UCI of a larger bit size than K bits and modulation symbols are subjected to FDM with the DMRS, for transmission. For example, the DMRS is located in symbol indexes #1, #4, #7, and #10 within a given RB with the density of 1/3. A pseudo noise (PN) sequence is used for a DMRS sequence. Frequency hopping may be activated for 2-symbol PUCCH format 2.
   - Configuration for PUCCH format 2 includes the following parameters for a corresponding PUCCH resource: the number of PRBs, the number of symbols for PUCCH transmission, and/or the first symbol for PUCCH transmission.
(3) PUCCH format 3 (PF3 or F3)
   - Supported UCI payload size: more than K bits (e.g., K=2)
   - Number of OFDM symbols constituting a single PUCCH: Y to Z symbols (e.g., Y=4 and Z=14)
   - Transmission structure: The DMRS and UCI are configured/mapped in TDM for/to different OFDM symbols. The UE transmits the UCI by applying DFT to encoded UCI bits. PUCCH format 3 does not support UE multiplexing for the same time-frequency resource (e.g., same PRB).
   Configuration for PUCCH format 3 includes the following parameters for a corresponding PUCCH resource: the number of PRBs, the number of symbols for PUCCH transmission, and/or the first symbol for PUCCH transmission.
(4) PUCCH format 4 (PF4 or F4)
   - Supported UCI payload size: more than K bits (e.g., K=2)
   - Number of OFDM symbols constituting a single PUCCH: Y to Z symbols (e.g., Y=4 and Z=14)
   - Transmission structure: The DMRS and UCI are configured/mapped in TDM for/to different OFDM symbols. PUCCH format 4 may multiplex up to 4 UEs in the same PRB, by applying an OCC at the front end of DFT and applying a CS (or interleaved FDM (IFDM) mapping) to the DMRS. In other words, modulation symbols of the UCI are subjected to TDM with the DMRS, for transmission.
   - Configuration for PUCCH format 4 includes the following parameters for a corresponding PUCCH resource: the number of symbols for PUCCH transmission, length for the OCC, an index for the OCC, and the first symbol for PUCCH transmission.

The table below shows the PUCCH formats. The PUCCH formats may be divided into short PUCCH formats (formats 0 and 2) and long PUCCH formats (formats 1, 3, and 4) according to PUCCH transmission length.

**Table 4**

| PUCCH format | Length in OFDM symbols N^{PUCCH}_{symb} | Number of bits | Usage | Etc. |
|---|---|---|---|---|
| 0 | 1 - 2 | =<2 | HARQ, SR | Sequence selection |
| 1 | 4-14 | =<2 | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM(no UE multiplexing) |
| 4 | 4-14 | >2 | HARQ, CSI, [SR] | DFT-s-OFDM(Pre DFT OCC) |

A PUCCH resource may be determined according to a UCI type (e.g., A/N, SR, or CSI). A PUCCH resource used for UCI transmission may be determined based on a UCI (payload) size. For example, the BS may configure a plurality of PUCCH resource sets for the UE, and the UE may select a specific PUCCH resource set corresponding to a specific range according to the range of the UCI (payload) size (e.g., numbers of UCI bits). For example, the UE may select one of the following PUCCH resource sets according to the number of UCI bits, N_{UCI}.
- PUCCH resource set #0, if the number of UCI bits =< 2
- PUCCH resource set #1, if 2< the number of UCI bits =< N₁
- PUCCH resource set #(K-1), if N_{K-2} < the number of UCI bits =< N_{K-1}

Here, K represents the number of PUCCH resource sets (K>1) and Nᵢ represents a maximum number of UCI bits supported by PUCCH resource set #i. For example, PUCCH resource set #1 may include resources of PUCCH formats 0 to 1, and the other PUCCH resource sets may include resources of PUCCH formats 2 to 4 (see Table 4).

Configuration for each PUCCH resource includes a PUCCH resource index, a start PRB index, and configuration for one of PUCCH format 0 to PUCCH format 4. The UE is configured with a code rate for multiplexing HARQ-ACK, SR, and CSI report(s) within PUCCH transmission using PUCCH format 2, PUCCH format 3, or PUCCH format 4, by the BS through a higher layer parameter maxCodeRate. The higher layer parameter maxCodeRate is used to determine how to feed back the UCI on PUCCH resources for PUCCH format 2, 3, or 4.

If the UCI type is SR and CSI, a PUCCH resource to be used for UCI transmission in a PUCCH resource set may be configured for the UE through higher layer signaling (e.g., RRC signaling). If the UCI type is HARQ-ACK for a semi-persistent scheduling (SPS) PDSCH, the PUCCH resource to be used for UCI transmission in the PUCCH resource set may be configured for the UE through higher layer signaling (e.g., RRC signaling). On the other hand, if the UCI type is HARQ-ACK for a PDSCH scheduled by DCI, the PUCCH resource to be used for UCI transmission in the PUCCH resource set may be scheduled by the DCI.

In the case of DCI-based PUCCH resource scheduling, the BS may transmit the DCI to the UE on a PDCCH and indicate a PUCCH resource to be used for UCI transmission in a specific PUCCH resource set by an ACK/NACK resource indicator (ARI) in the DCI. The ARI may be used to indicate a PUCCH resource for ACK/NACK transmission and also be referred to as a PUCCH resource indicator (PRI). Here, the DCI may be used for PDSCH scheduling and the UCI may include HARQ-ACK for a PDSCH. The BS may configure a PUCCH resource set including a larger number of PUCCH resources than states representable by the ARI by (UE-specific) higher layer (e.g., RRC) signaling for the UE. The ARI may indicate a PUCCH resource subset of the PUCCH resource set and which PUCCH resource in the indicated PUCCH resource subset is to be used may be determined according to an implicit rule based on transmission resource information about the PDCCH (e.g., the starting CCE index of the PDCCH).

For UL-SCH data transmission, the UE should include UL resources available for the UE and, for DL-SCH data reception, the UE should include DL resources available for the UE. The UL resources and the DL resources are assigned to the UE by the BS through resource allocation. Resource allocation may include time domain resource allocation (TDRA) and frequency domain resource allocation (FDRA). In the present disclosure, UL resource allocation is also referred to as a UL grant and DL resource allocation is referred to as DL assignment. The UL grant is dynamically received by the UE on the PDCCH or in RAR or semi-persistently configured for the UE by the BS through RRC signaling. DL assignment is dynamically received by the UE on the PDCCH or semi-persistently configured for the UE by the BS through RRC signaling.

On UL, the BS may dynamically allocate UL resources to the UE through PDCCH(s) addressed to a cell radio network temporary Identifier (C-RNTI). The UE monitors the PDCCH(s) in order to discover possible UL grant(s) for UL transmission. The BS may allocate the UL resources using a configured grant to the UE. Two types of configured grants, Type 1 and Type 2, may be used. In Type 1, the BS directly provides the configured UL grant (including periodicity) through RRC signaling. In Type 2, the BS may configure a periodicity of an RRC-configured UL grant through RRC signaling and signal, activate, or deactivate the configured UL grant through the PDCCH addressed to a configured scheduling RNTI (CS-RNTI). For example, in Type 2, the PDCCH addressed to the CS-RNTI indicates that the corresponding UL grant may be implicitly reused according to the configured periodicity through RRC signaling until deactivation.

On DL, the BS may dynamically allocate DL resources to the UE through PDCCH(s) addressed to the C-RNTI. The UE monitors the PDCCH(s) in order to discover possible DL grant(s). The BS may allocate the DL resources to the UE using SPS. The BS may configure a periodicity of configured DL assignment through RRC signaling and signal, activate, or deactivate the configured DL assignment through the PDCCH addressed to the CS-RNTI. For example, the PDCCH addressed to the CS-RNTI indicates that the corresponding DL assignment may be implicitly reused according to the configured periodicity through RRC signaling until deactivation.

Hereinafter, resource allocation by the PDCCH and resource allocation by RRC will be described in more detail.

### * Resource Allocation by PDCCH: dynamic grant/assignment

The PDCCH may be used to schedule DL transmission on the PDSCH and UL transmission on the PUSCH. DCI on the PDCCH for scheduling DL transmission may include DL resource assignment that at least includes a modulation and coding format (e.g., modulation and coding scheme (MCS)) index *I*_{MCS}), resource allocation, and HARQ information, associated with a DL-SCH. DCI on the PDCCH for scheduling UL transmission may include a UL scheduling grant that at least includes a modulation and coding format, resource allocation, and HARQ information, associated with a UL-SCH. HARQ information on a DL-SCH or UL-SCH may include a new information indicator (NDI), transport block size (TBS), redundancy version (RV), and HARQ process ID (i.e., HARQ process number). The size and usage of the DCI carried by one PDCCH differs according to a DCI format. For example, DCI format 0_0, DCI format 0_1, or DCI format 0_2 may be used to schedule the PUSCH, and DCI format 1_0, DCI format 1_1, or DCI format 1_2 may be used to schedule the PDSCH. Particularly, DCI format 0_2 and DCI format 1_2 may be used to schedule transmission having higher transmission reliability and lower latency requirements than transmission reliability and latency requirement guaranteed by DCI format 0_0, DCI format 0_1, DCI format 1_0, or DCI format 1_1. Some implementations of the present disclosure may be applied to UL data transmission based on DCL format 0_2. Some implementations of the present disclosure may be applied to DL data reception based on DCI format 1_2.

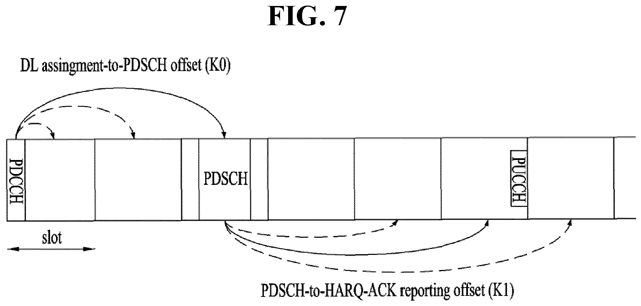

FIG. 7 illustrates an example of PDSCH TDRA caused by a PDCCH and an example of PUSCH TDRA caused by the PDCCH.

DCI carried by the PDCCH in order to schedule a PDSCH or a PUSCH includes a TDRA field. The TDRA field provides a value *m* for a row index *m*+1 to an allocation table for the PDSCH or the PUSCH. Predefined default PDSCH time domain allocation is applied as the allocation table for the PDSCH or a PDSCH TDRA table that the BS configures through RRC signaled *pdsch-TimeDomainAllocationList* is applied as the allocation table for the PDSCH. Predefined default PUSCH time domain allocation is applied as the allocation table for the PUSCH or a PUSCH TDRA table that the BS configures through RRC signaled *pusch-TimeDomainAllocationList* is applied as the allocation table for the PUSCH. The PDSCH TDRA table to be applied and/or the PUSCH TDRA table to be applied may be determined according a fixed/predefined rule (e.g., refer to 3GPP TS 38.214).

In PDSCH time domain resource configurations, each indexed row defines a DL assignment-to-PDSCH slot offset *K*₀, a start and length indicator value *SLIV* (or directly, a start position (e.g., start symbol index *S*) and an allocation length (e.g., the number of symbols, *L*) of the PDSCH in a slot), and a PDSCH mapping type. In PUSCH time domain resource configurations, each indexed row defines a UL grant-to-PUSCH slot offset *K*₂, a start position (e.g., start symbol index *S*) and an allocation length (e.g., the number of symbols, *L*) of the PUSCH in a slot, and a PUSCH mapping type. *K*₀ for the PDSCH and *K*₂ for the PUSCH indicate the difference between the slot with the PDCCH and the slot with the PDSCH or PUSCH corresponding to the PDCCH. *SLIV* denotes a joint indicator of the start symbol *S* relative to the start of the slot with the PDSCH or PUSCH and the number of consecutive symbols, *L*, counting from the symbol *S*. There are two PDSCH/PUSCH mapping types: one is mapping type A and the other is mapping type B. In the case of PDSCH/PUSCH mapping type A, a DMRS is mapped to a PDSCH/PUSCH resource with respect to the start of a slot. One or two of the symbols of the PDSCH/PUSCH resource may be used as DMRS symbol(s) according to other DMRS parameters. For example, in the case of PDSCH/PUSCH mapping type A, the DMRS is located in the third symbol (symbol #2) or the fourth symbol (symbol #3) in the slot according to RRC signaling. In the case of PDSCH/PUSCH mapping type B, a DMRS is mapped with respect to the first OFDM symbol of a PDSCH/PUSCH resource. One or two symbols from the first symbol of the PDSCH/PUSCH resource may be used as DMRS symbol(s) according to other DMRS parameters. For example, in the case of PDSCH/PUSCH mapping type B, the DMRS is located at the first symbol allocated for the PDSCH/PUSCH. In the present disclosure, the PDSCH/PUSCH mapping type may be referred to as a mapping type or a DMRS mapping type. For example, in the present disclosure, PUSCH mapping type A may be referred to as mapping type A or DMRS mapping type A, and PUSCH mapping type B may be referred to as mapping type B or DMRS mapping type B.

The scheduling DCI includes an FDRA field that provides assignment information about RBs used for the PDSCH or the PUSCH. For example, the FDRA field provides information about a cell for PDSCH or PUSCH transmission to the UE, information about a BWP for PDSCH or PUSCH transmission, and/or information about RBs for PDSCH or PUSCH transmission.

### * Resource Allocation by RRC

As mentioned above, there are two types of transmission without dynamic grant: configured grant Type 1 and configured grant Type 2. In configured grant Type 1, a UL grant is provided by RRC and stored as a configured UL grant. In configured grant Type 2, the UL grant is provided by the PDCCH and stored or cleared as the configured UL grant based on L1 signaling indicating configured UL grant activation or deactivation. Type 1 and Type 2 may be configured by RRC per serving cell and per BWP. Multiple configurations may be active simultaneously on different serving cells.

When configured grant Type 1 is configured, the UE may be provided with the following parameters through RRC signaling:
- *cs-RNTI* corresponding to a CS-RNTI for retransmission;
- *periodicity* corresponding to a periodicity of configured grant Type 1;
- *timeDomainOffset* indicating an offset of a resource with respect to system frame number (SFN) = 0 in the time domain;
- *timeDomainAllocation* value *m* that provides a row index *m*+1 pointing to the allocation table, indicating a combination of the start symbol *S*, the length *L,* and the PUSCH mapping type;
- *frequencyDomainAllocation* that provides frequency domain resource allocation; and
- *mcsAndTBS* that provides *I*_{MCS} indicating a modulation order, a target code rate, and a transport block size.

Upon configuration of configured grant Type 1 for a serving cell by RRC, the UE stores the UL grant provided by RRC as a configured UL grant for an indicated serving cell and initializes or re-initializes the configured UL grant to start in a symbol according to *timeDomainOffset* and *S* (derived from *SLIV*) and to recur with *periodicity.* After the UL grant is configured for configured grant Type 1, the UE may consider that the UL grant recurs in association with each symbol satisfying: [(SFN * *numberOfSlotsPerFrame* (*numberOfSymbolsPerSlot*) + (slot number in the frame * *numberOfSymbolsPerSlot*) + symbol number in the slot] = (*timeDomainOffset* * *numberOfSymbolsPerSlot* + *S* + N * *periodicity*) modulo (1024 * *numberOfSlotsPerFrame* * *numberOfSymbolsPerSlot*), for all N >= 0, where *numberOfSlotsPerFrame* and *numberOfSymbolsPerSlot* indicate the number of consecutive slots per frame and the number of consecutive OFDM symbols per slot, respectively (refer to Table 1 and Table 2).

For configured grant Type 2, the UE may be provided with the following parameters by the BS through RRC signaling:
- *cs-RNTI* corresponding to a CS-RNTI for activation, deactivation, and retransmission; and
- *periodicity* that provides a periodicity of configured grant Type 2.

An actual UL grant is provided to the UE by the PDCCH (addressed to the CS-RNTI). After the UL grant is configured for configured grant Type 2, the UE may consider that the UL grant recurs in association with each symbol satisfying: [(SFN * *numberOfSlotsPerFrame* * *numberOfSymbolsPerSlot*) + (slot number in the frame * *numberOfSymbolsPerSlot*) + symbol number in the slot] = [(SFN_{start time} * *numberOfSlotsPerFrame* * *numberOfSymbolsPerSlot* + slot_{start time} * *numberOfSymbolsPerSlot* + symbol_{start time}) + N * *periodicity*] modulo (1024 * *numberOfSlotsPerFrame* * *numberOfSymbolsPerSlot*), for all N >= 0, where SFN_{start time}, slot_{start time}, and symbol_{start time} represent an SFN, a slot, and a symbol, respectively, of the first transmission opportunity of the PUSCH after the configured grant is (re-)initialized, and *numberOfSlotsPerFrame* and *numberOfSymbolsPerSlot* indicate the number of consecutive slots per frame and the number of consecutive OFDM symbols per slot, respectively (refer to Table 1 and Table 2).

In some scenarios, a parameter *harq-ProcID-Offset* and/or a parameter *harq-ProcID-Offset2* used to derive HARQ process IDs for configured UL grants may be further provided by the BS to the UE. *harq-ProcID-Offset* is an offset of a HARQ process for a configured grant for operation with shared spectrum channel access, and *harq-ProcID-Offset2* is an offset of a HARQ process for a configured grant. In the present disclosure, *cg-RetransmissionTimer* is a duration after (re)transmission based on a configured grant in which the UE should not autonomously perform retransmission based on the HARQ process of the (re)transmission. *cg-RetransmissionTimer* may be provided to the UE by the BS when retransmission on a configured UL grant is configured. For configured grants configured with neither *harq-ProcID-Offset* nor *cg-RetransmissionTimer,* the HARQ process ID associated with the first symbol of UL transmission may be derived from the following equation: HARQ Process ID = [floor(CURRENT_symbol/*periodicity*)] modulo *nrofHARQ-Processes.* For configured UL grants with *harq-ProcID-Offset2,* the HARQ process ID associated with the first symbol of UL transmission may be derived from the following equation: HARQ Process ID = [floor(CURRENT_symbol / *periodicity*)] modulo *nrofHARQ-Processes* + *harq-ProcID-Offset2,* where CURRENT_symbol = (SFN * *numberOfSlotsPerFrame* * *numberOfSymbolsPerSlot* + slot number in the frame * *numberOfSymbolsPerSlot* + symbol number in the slot), and *numberOfSlotsPerFrame* and *numberOfSymbolsPerSlot* denote the number of consecutive slots per frame and the number of consecutive OFDM symbols per slot, respectively. For configured UL grants with *cg-RetransmissionTimer,* the UE may select a HARQ process ID from among HARQ process IDs available for the configured grant configuration.

On DL, the UE may be configured with semi-persistent scheduling (SPS) per serving cell and per BWP by RRC signaling from the BS. For DL SPS, DL assignment is provided to the UE by the PDCCH and stored or cleared based on L1 signaling indicating SPS activation or deactivation. When SPS is configured, the UE may be provided with the following parameters by the BS through RRC signaling (e.g., SPS configuration) used to configure a semi-persistent transmission:
- *cs-RNTI* corresponding to a CS-RNTI for activation, deactivation, and retransmission;
- *nrofHARQ-Processes* that provides the number of HARQ processes for SPS;
- *periodicity* that provides a periodicity of configured DL assignment for SPS;
- *n1PUCCH-AN* that provides a HARQ resource for a PUCCH for SPS (the network configures the HARQ resource as format 0 or format 1, and the actual PUCCH resource is configured by *PUCCH-Config* and referred to in *n1PUCCH-AN* by the ID thereof).

Multiple DL SPS configurations may be configured within the BWP of a serving cell. After DL assignment is configured for SPS, the UE may consider sequentially that N-th DL assignment occurs in a slot satisfying: (*numberOfSlotsPerFrame* * SFN + slot number in the frame) = [(*numberOfSlotsPerFrame* * SFN_{start time} + slot_{start time}) + N * *periodicity* * *numberOfSlotsPerFrame* / 10] modulo (1024 * *numberOfSlotsPerFrame*), where SFN_{start time} and slot_{start time} represent an SFN and a slot, respectively, of first transmission of the PDSCH after configured DL assignment is (re-)initialized, and *numberOfSlotsPerFrame* and *numberOfSymbolsPerSlot* indicate the number of consecutive slots per frame and the number of consecutive OFDM symbols per slot, respectively (refer to Table 1 and Table 2).

In some scenarios, a parameter *harq-ProcID-Offset* used to derive HARQ process IDs for configured DL assignments may be further provided by the BS to the UE. *harq-ProcID-Offset* is an offset of a HARQ process for SPS. For configured DL assignments without *harq-ProcID-Offset,* a HARQ process ID associated with a slot in which DL transmission starts may be determined from the following equation: HARQ Process ID = [floor (CURRENT_slot * 10 / (*numberOfSlotsPerFrame* * *periodicity*))] modulo *nrofHARQ-Processes,* where CURRENT_slot = [(SFN * *numberOfSlotsPerFrame*) + slot number in the frame], and *numberOfSlotsPerFrame* denotes the number of consecutive slots per frame. For configured DL assignments with *harq-ProcID-Offset,* a HARQ process ID associated with a slot in which DL transmission starts may be determined from the following equation: HARQ Process ID = [floor (CURRENT_slot / periodicity)] modulo nrofHARQ-Processes + harq-ProcID-Offset, where CURRENT_slot = [(SFN * numberOfSlotsPerFrame) + slot number in the frame], and *numberOfSlotsPerFrame* denotes the number of consecutive slots per frame.

If the CRC of a corresponding DCI format is scrambled with the CS-RNTI provided by the RRC parameter *cs-RNTI,* and a new data indicator field for an enabled transport block is set to 0, the UE validates, for scheduling activation or scheduling release, a DL SPS assignment PDCCH or a configured UL grant Type 2 PDCCH. Validation of the DCI format is achieved if all fields for the DCI format are set according to Table 5 and Table 6. Table 5 shows an example of special fields for DL SPS and UL grant Type 2 scheduling activation PDCCH validation, and Table 6 shows an example of special fields for DL SPS and UL grant Type 2 scheduling release PDCCH validation.

**Table 5**

| | DCI format 0_0/0_1 | DCI format 1_0 | DCI format 1_1 |
|---|---|---|---|
| HARQ process number | set to all '0's | set to all '0's | set to all '0's |
| Redundancy version | set to '00' | set to '00' | For the enabled transport block: set to '00' |

**Table 6**

| | DCI format 0_0 | DCI format 1_0 |
|---|---|---|
| HARQ process number | set to all '0's | set to all '0's |
| Redundancy version | set to '00' | set to '00' |
| Modulation and coding scheme | set to all '1's | set to all '1's |
| Resource block assignment | set to all '1's | set to all '1's |

Actual DL assignment and UL grant for DL SPS or UL grant Type 2, and a corresponding MCS are provided by resource assignment fields (e.g., a TDRA field providing a TDRA value m, an FDRA field providing frequency resource block assignment, and/or an MCS field) in the DCI format carried by a corresponding DL SPS or UL grant Type 2 scheduling activation PDCCH. If validation is achieved, the UE considers information in the DCI format as valid activation or valid release of DL SPS or configured UL grant Type 2.

In the present disclosure, a PDSCH based on DL SPS may be referred to as an SPS PDSCH, and a PUSCH based on a UL configured grant (CG) may be referred to as a CG PUSCH. A PDSCH dynamically scheduled by DCI carried on a PDCCH may be referred to as a dynamic grant (DG) PDSCH, and a PUSCH dynamically scheduled by DCI carried by on a PDCCH may be referred to as a DG PUSCH.

FIG. 7 illustrates a HARQ-ACK transmission/reception procedure.

Referring to FIG. 7, the UE may detect a PDCCH in a slot n. Next, the UE may receive a PDSCH in a slot n+K0 according to scheduling information received through the PDCCH in the slot n and then transmit UCI through a PUCCH in a slot n+K1. In this case, the UCI includes a HARQ-ACK response for the PDSCH.

The DCI (e.g., DCI format 1_0 or DCI format 1_1) carried by the PDCCH for scheduling the PDSCH may include the following information.
- FDRA: FDRA indicates an RB set allocated to the PDSCH.
- TDRA: TDRA indicates a DL assignment-to-PDSCH slot offset K0, the start position (e.g., symbol index S) and length (e.g., the number of symbols, L) of the PDSCH in a slot, and the PDSCH mapping type. PDSCH mapping Type A or PDSCH mapping Type B may be indicated by TDRA. For PDSCH mapping Type A, the DMRS is located in the third symbol (symbol #2) or fourth symbol (symbol #3) in a slot. For PDSCH mapping Type B, the DMRS is allocated in the first symbol allocated for the PDSCH.
- PDSCH-to-HARQ_feedback timing indicator: This indicator indicates K1.

If the PDSCH is configured to transmit a maximum of one TB, a HARQ-ACK response may consist of one bit. If the PDSCH is configured to transmit a maximum of 2 TBs, the HARQ-ACK response may consist of 2 bits when spatial bundling is not configured and one bit when spatial bundling is configured. When a HARQ-ACK transmission timing for a plurality of PDSCHs is designated as slot n+K1, UCI transmitted in slot n+K1 includes a HARQ-ACK response for the plural PDSCHs.

In the present disclosure, a HARQ-ACK payload consisting of HARQ-ACK bit(s) for one or plural PDSCHs may be referred to as a HARQ-ACK codebook. The HARQ-ACK codebook may be categorized as i) a semi-static HARQ-ACK codebook, ii) a dynamic HARQ-ACK codebook and iii) HARQ process based HARQ-ACK codebook, according to a HARQ-ACK payload determination scheme.

In the case of the semi-static HARQ-ACK codebook, parameters related to a HARQ-ACK payload size that the UE is to report are semi-statically determined by a (UE-specific) higher layer (e.g., RRC) signal. The HARQ-ACK payload size of the semi-static HARQ-ACK codebook, e.g., the (maximum) HARQ-ACK payload (size) transmitted through one PUCCH in one slot, may be determined based on the number of HARQ-ACK bits corresponding to a combination (hereinafter, bundling window) of all DL carriers (i.e., DL serving cells) configured for the UE and all DL scheduling slots (or PDSCH transmission slots or PDCCH monitoring slots) for which the HARQ-ACK transmission timing may be indicated. That is, in a semi-static HARQ-ACK codebook scheme, the size of the HARQ-ACK codebook is fixed (to a maximum value) regardless of the number of actually scheduled DL data. For example, DL grant DCI (PDCCH) includes PDSCH-to-HARQ-ACK timing information, and the PDSCH-to-HARQ-ACK timing information may have one (e.g., k) of a plurality of values. For example, when the PDSCH is received in slot #m and the PDSCH-to-HARQ-ACK timing information in the DL grant DCI (PDCCH) for scheduling the PDSCH indicates k, the HARQ-ACK information for the PDSCH may be transmitted in slot #(m+k). As an example, k ∈ {1, 2, 3, 4, 5, 6, 7, 8}. When the HARQ-ACK information is transmitted in slot #n, the HARQ-ACK information may include possible maximum HARQ-ACK based on the bundling window. That is, HARQ-ACK information of slot #n may include HARQ-ACK corresponding to slot #(n-k). For example, when k ∈ {1, 2, 3, 4, 5, 6, 7, 8}, the HARQ-ACK information of slot #n may include HARQ-ACK corresponding to slot #(n-8) to slot #(n-1) regardless of actual DL data reception (i.e., HARQ-ACK of a maximum number). Here, the HARQ-ACK information may be replaced with a HARQ-ACK codebook or a HARQ-ACK payload. A slot may be understood/replaced as/with a candidate occasion for DL data reception. As described in the example, the bundling window may be determined based on the PDSCH-to-HARQ-ACK timing based on a HARQ-ACK slot, and a PDSCH-to-HARQ-ACK timing set may have predefined values (e.g., {1, 2, 3, 4, 5, 6, 7, 8}) or may be configured by higher layer (RRC) signaling. The semi-static HARQ-ACK codebook is referred to as a Type-1 HARQ-ACK codebook. For the Type-1 HARQ-ACK codebook, the number of bits to be transmitted in a HARQ-ACK report is fixed and may be potentially large. If many cells are configured but only few cells are scheduled, the Type-1 HARQ-ACK codebook may be inefficient.

In the case of the dynamic HARQ-ACK codebook, the HARQ-ACK payload size that the UE is to report may be dynamically changed by the DCI etc. The dynamic HARQ-ACK codebook is referred to as a Type-2 HARQ-ACK codebook. The Type-2 HARQ-ACK codebook may be considered as optimized HARQ-ACK feedback because the UE sends feedback only for scheduled serving cells. However, in poor channel conditions, the UE may erroneously determine the number of scheduled serving cells. To solve this problem, a downlink assignment index (DAI) may be included as a part of DCI. For example, in the dynamic HARQ-ACK codebook scheme, DL scheduling DCI may include a counter-DAI (i.e., c-DAI) and/or a total-DAI (i.e., t-DAI). Here, the DAI indicates a downlink assignment index and is used for the BS to inform the UE of transmitted or scheduled PDSCH(s) for which HARQ-ACK(s) are to be included in one HARQ-ACK transmission. Particularly, the c-DAI is an index indicating order between PDCCHs carrying DL scheduling DCI (hereinafter, DL scheduling PDCCHs), and t-DAI is an index indicating the total number of DL scheduling PDCCHs up to a current slot in which a PDCCH with the t-DAI is present.

In the case of a HARQ-ACK codebook based on HARQ processes, the HARQ-ACK payload is determined based on all HARQ processes of all configured (or activated) serving cells in a PUCCH group. For example, the size of the HARQ-ACK payload to be reported by the UE using the HARQ-ACK codebook based on HARQ processes may be determined based on the number of all configured or activated serving cells in the PUCCH group configured for the UE and the number of HARQ processes for the serving cells. The HARQ-ACK codebook based on HARQ processes is also referred to as a Type-3 HARQ-ACK codebook. The type-3 HARQ-ACK codebook may be applied to one-shot feedback.

The time and frequency resources that can be used by the UE to report CSI are controlled by the BS. In the 3GPP based systems, CSI may consist of the following indicators/reports: channel quality indicator (CQI), precoding matrix indicator (PMI), CSI-RS resource indicator (CRI), SS/PBCH block resource indicator (SSBRI), layer indicator (LI), rank indicator (RI), layer-1 reference signal received power (L1-RSRP) or layer-1 signal to interference and noise ratio (L1-SINR).

In some scenarios, for CQI, PMI, CRI, SSBRI, LI, RI, L1-RSRP, L1-SINR a UE is configured by higher layer (e.g., RRC) signaling with N>=1 *CSI-ReportConfig* Reporting Settings, M>=1 *CSI-ResourceConfig* Resource Settings, and one or two list(s) of trigger states (given by the higher layer parameters *CSI-AperiodicTriggerStateList* and *CSI-SemiPersistentOnPUSCH-TriggerStateList*)*.* Each trigger state in *CSI-AperiodicTriggerStateList* contains a list of associated *CSI-ReportConfigs* indicating the Resource Set IDs for channel and optionally for interference. Each trigger state in *CSI-SemiPersistentOnPUSCH-TriggerStateList* contains one associated *CSI-ReportConfig.*

There are three types of reporting: periodic CSI (P-CSI) reporting, semi-persistent CSI (SP-CSI) reporting, and aperiodic CSI (A-CSI) reporting. The UE performs CSI reporting based on an RRC configuration for the CSI reporting by the BS. The reporting configuration for CSI may be aperiodic (using a PUSCH), periodic (using a PUCCH), or semi-persistent (using a PUCCH and a DCI activated PUSCH).

In the existing wireless communication system, a BS transmits a reference signal (e.g., CSI-RS or SSB) for CSI reporting, and a UE performs measurement on the reference signal based on a configuration or triggering of the BS and periodically or aperiodically CSI reporting based on the measured value. However, URLLC services may have unpredictable and sporadic traffic characteristics. Therefore, periodic CSI reporting based on the reference signal may result in unnecessary waste of resources, and aperiodic CSI reporting based on the reference signal may not be suitable for burst transmission that occurs in a short period of time due to a delay time of CSI calculation, or the like.

In some implementations of the present disclosure, the UE may perform CSI reporting to the BS based on PDSCH reception. In some implementations of the present disclosure, a burden on the UE of having to measure a separate CSI reference signal may be reduced by performing CSI reporting based on the results of PDSCH reception. A time required for the UE to perform CSI computation based on the reference signal may be saved by performing CSI reporting by the UE based on PDSCH reception, and more immediate CSI reporting may be achieved after PDSCH reception.

Hereinafter, to allow the BS to select a correct modulation and coding scheme (MCS) when performing scheduling for the UE, some implementations of the present disclosure of performing CSI reporting based on the reception result of a PDSCH and some implementations of the present disclosure of multiplexing CSI reporting with other UCI will be described.

Differently from the exiting CSI reporting, CSI reporting based on the reception result of a PDSCH scheduled by the BS may use the PDSCH as a measurement resource and use scheduling information to generate CSI. Thus, for PDSCH-based CSI reporting, when a different trigger method from CSI reporting based on CSI-RS, SSB, or the like, and another method of reporting CSI through an uplink channel are used, lower signaling overhead may be achieved.

Hereinafter, some implementations of the present disclosure related to a CSI trigger method and a UCI multiplexing method and procedure of CSI information, which may be used when the UE reports an offset of an MCS index as CSI based on the PDSCH reception result will be described. For example, hereinafter, a series of processes required for the UE to perform channel state reporting based on PDSCH reception results, for example, a method and procedure for selecting a PDSCH to be used for channel state reporting and configuring contents of the channel state reporting, and a method and procedure for indicating or configuring uplink resources necessary for reporting and multiplexing the uplink resource with other uplink control information will be described.

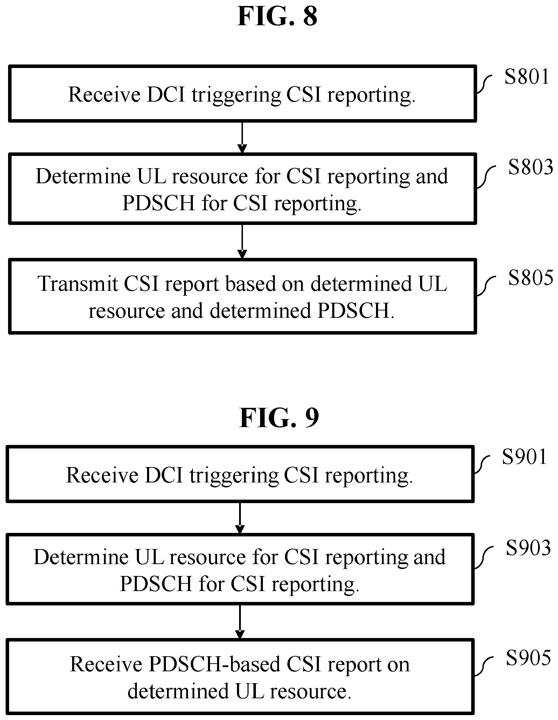

FIG. 8 illustrates a UE operation flow according to some implementations of the present disclosure.

The UE may receive higher layer parameter(s) required for PDSCH reception-based CSI reporting. That is, the UE may receive a configuration regarding PDSCH-based CSI report. Then, the UE may receive DCI scheduling a PDSCH and/or separate DCI triggering a CSI report (S801) and determine a PDSCH to be used for the basis of the CSI reporting and a UL resource for the CSI reporting (S803). The UE may transmit the CSI report based on the determined UL resource and the determined PDSCH (S805).

FIG. 9 illustrates a BS operation flow according to some implementations of the present disclosure.

The BS may transmit higher layer parameter(s) required for PDSCH reception-based CSI report. That is, the BS may transmit a configuration regarding a PDSCH-based CSI report to the UE. Then, the BS may transmit DCI scheduling a PDSCH and/or DCI triggering CSI reporting to the UE (S901) and determine a PDSCH to be used for the basis of the CSI reporting to the UE and a UL resource for the CSI reporting (S903). The BS may receive the CSI report on the assumption that the UE is supposed to transmit the CSI report on the basis of the determined UL resource and the determined PDSCH (S905). For example, the BS may receive PDSCH-based CSI report on the determined UL resource.

The BS may provide a configuration for PDSCH reception result based CSI to the UE through higher layer signaling, the BS and the UE may select the same PDSCH from among the scheduled PDSCHs according to some implementations of the present disclosure, the UE may perform CSI reporting on the basis of the reception result of the corresponding PDSCH, and the BS may assume that the UE performs CSI reporting on the basis of the PDSCH.

Some of the methods according to implementations of the disclosure may be selected and applied. Each of the methods may operate independently without a separate combination, or may be operated in a form in which one or more methods are combined and connected. In the present disclosure, some terms, symbols, orders, and the like used for the description of the implementations of the present disclosure may be replaced by other terms, symbols, orders, or the like.

In some implementations of the present disclosure, an MCS or an MCS value may mean not only the MCS itself but also an integer value MCS index I_{MCS} to be used when delivering DCI by using an MCS used in the 3GPP TS 38.214.

In some implementations of the present disclosure, an MCS offset may refer to a difference between two MCS indices I_{MCS}. For example, the MCS offset may be calculated from a difference between I_{MCS,target} and I_{MCS}, where I_{MCS,target} is the largest MCS index such that an estimated block error rate (BLER) for a TB from a PDSCH received with this MCS index would be less than or equal to a BLER target, and I_{MCS} is an MCS index of the received TB from the PDSCH.

In some implementations of the present disclosure, the MCS tables may be semi-statically or dynamically configured. Dynamic signaling of the MCS table may be supported by configuring the UE with MCS-C-RNTI.

### implementation 1> delta-MCS reporting

The UE may receive a PDSCH and may transmit the reception result as CSI in a PUCCH or PUSCH resource. The reception result of the PDSCH may include at least one of the following cases.
> Receiving power of each resource element (RE) on PDSCH
> A log-likelihood (LLR) value of a received soft bit, or this value and a predefined minimum required LLR value (e.g. minimum LLR value of bits)
> SINR of PDSCH
> Decoding iteration required until successful PDSCH reception

In some implementations of the present disclosure, the UE may change a following value as at least the MCS offset form on the basis of the result of receiving the PDSCH and transmit it as CSI to the BS through PUCCH or the PUSCH transmission. A CQI/MCS offset based on the result of receiving the PDSCH, for example, a difference between a scheduled or received coding rate and a required coding rate may be reported. Here, the MCS offset may be calculated from a difference between I_{MCS,target} and I_{MCS}, where I_{MCS,target} is the largest MCS index such that an estimated BLER for a TB from a PDSCH received with this MCS index be less than or equal to a BLER target, and I_{MCS} is an MCS index of the received TB from the PDSCH.

The PUCCH or the PUSCH may be a PUCCH or a PUSCH on which HARQ-ACK corresponding to the received PDSCH is transmitted. Alternatively, the PUCCH or the PUSCH may be a PUCCH that is separately configured to perform CSI reporting based on a result of receiving the PDSCH or a PUSCH that overlaps in time with the corresponding PUCCH. The separately configured PUCCH may be determined through a PUCCH resource configured by higher layer signaling of the BS.

The BLER target is a value determined through L1 signaling (e.g. DCI) and/or higher layer signaling of the BS, and for example, 0.1 or 0.00001 may be configured as the BLER target. Alternatively, the BLER target may be determined through an MCS table which the UE uses receiving scheduling of the PDSCH. For example, when an MCS index table 1 or an MCS index table 2 defined in the 3GPP TS 38.214 is used, 0.1 may be used as the BLER target, and when an MCS index table 3 is used, 0.00001 may be used as the BLER target.

In the case of performing CSI reporting including an MCS offset based on a PDSCH reception process and results by using Implementation 1 or a similar method, a PDSCH as a basis of calculation of the MCS offset may be limited to a PDSCH scheduled through a certain MCS index table. The certain MCS table may be an MCS index table related to a configured BLER target, or an MCS index table (e.g., mcs-Table or mcs-TableDCI-1-2 in PDSCH-Config that is an RRC configuration) that is semi-statically configured for the certain DCI format.

### implementation 1-1> delta-MCS triggering method

In Implementation 1, in at least one of the following cases, the UE may receive a PDSCH and perform CSI reporting including the MCS offset determined according to Implementation 1.
> DCI scheduling a PDSCH or an RRC configuration related to SPS PDSCH may indicate or configure CSI reporting including the MCS offset. To indicate this via a DCI, a separate DCI field may be added. The corresponding field may be 1-bit information and may indicate whether the UE needs to perform the corresponding CSI reporting.
> CSI reporting including the MCS offset and a corresponding RNTI may be configured per UE, and the UE may perform CSI reporting including the MCS offset for the PDSCH scheduled through the corresponding RNTI. Alternatively, the UE may perform CSI reporting including the MCS offset only for a PDSCH that is not scheduled through a certain RNTI (e.g., MCS-C-RNTI). In some scenarios, an MCS index table 3 (refer to table 5.1.3.1-3 of 3GPP TS 38.214) may be determined to be used for a PDSCH scheduled by a PDCCH having a CRC scrambled with an MCS-C-RNTI, and thus when the MCS offset is reported only when scheduling is performed with the MCS-C-RNTI, an MCS index table used for calculation of delta-MCS, that is, the MCS offset may be fixed to one table. Here, the MCS-C-RNTI may be a unique UE identification used to indicate an alternative MCS for a PDSCH and a PUSCH and may be configured for the UE by the BS through an RRC configuration. When the MCS-C-RNTI is configured, RNTI scrambling of the DCI CRC may be used to select the corresponding MCS table.
> When the UE fails in decoding a transport block included in the received PDSCH, that is, when at least one of HARQ-ACK feedbacks related to the received PDSCH is NACK, the UE may perform CSI reporting including the MCS offset.

In some implementations, when the UE performs CSI reporting including the MCS offset, the UE may transmit the MCS offset together with a HARQ-ACK response corresponding to the received PDSCH.

In some implementations, when the UE performs CSI reporting including the MCS offset and a PUCCH resource corresponding thereto is configured therewith, the UE may perform CSI reporting including the MCS offset at a position apart by a certain symbol based on a time point of receiving the received PDSCH or a time point of transmitting HARQ-ACK corresponding to reception of the PDSCH, for example, at a position apart by a certain number of symbols from a time point of receiving the received PDSCH or a time point of transmitting HARQ-ACK corresponding to reception of the PDSCH.

The certain number of symbols may be a predefined value, a value determined based on a capability signaling of the UE and a subcarrier spacing of the UL BWP, or a value explicitly configured by the BS through higher layer signaling to the UE.

When CSI reporting including the MCS offset based on PDSCH reception is performed using implementation 1 or a similar method, and when it is possible to trigger the corresponding CSI reporting through DCI, if the CSI reporting is triggered through activation DCI for the SPS configuration, triggering the corresponding CSI reporting may be limitedly applied to the first PDSCH of the corresponding SPS configuration.

### implementation 2> bit construction for delta-MCS

When the UE performs CSI reporting including the MCS offset to use Implementation 1, at least one of the following methods may be used to represent the MCS offset.

The UE may represent the calculated MCS offset as an entry index of a predefined or preconfigured table. For example, the following tables may be considered as the predefined table.

**Table 7**

| **Index or bit representation** | **Calculated MCS offset** |
|---|---|
| 0 | 0 (MCS offset = 0) |
| 1 | +1 or higher ((MCS offset ≥ 1) |

**Table 8**

| **Index or bit representation** | **Calculated MCS offset** |
|---|---|
| 0 | -1 or lower (MCS offset >= -1) |
| 1 | 0 (MCS offset = 0) |
| 2 | +1 (MCS offset = +1) |
| 3 | +3 or higher (MCS offset > 1) |

Errors due to quantization may occur in a process of mapping the MCS offset calculated by the UE to an entry of the table. For example, although an MCS offset value to be represented in Table 8 is {-1, 0, +1, +3}, the MCS offset may be represented by -1 due to a limit of a representation range when the calculated MCS offset is less than -1. In consideration of the reliability of transmission when the calculated MCS offset is greater than +1 and less than 3, the MCS offset represented based on Table 8 may always be +3 in the corresponding case. Accordingly, the range of the MCS offset value actually expressed in the corresponding table may be (equal to or less than -1, equal to 0, and larger than 1).

To mitigate the errors that may occur, for example, the size of the table may be increased as illustrated in Table 9.

**Table 9**

| **Index or bit representation** | **Calculated MCS offset** |
|---|---|
| 0 | -5 or lower (MCS offset ≤ -5) |
| 1 | -3 (-5 < MCS offset ≤ -3) |
| 2 | -1 (-3 < MCS offset ≤ -1) |
| 3 | 0 (MCS offset = 0) |
| 4 | +1 (0 < MCS offset <_1) |
| 5 | +3 (1 < MCS offset < 3) |
| 6 | +5 (3 < MCS offset ≤ 5) |
| 7 | +7 or higher (5 < MCS offset) |

Alternatively, when the range of the required MCS offset is not large, a table in which an MCS offset interval between entries is narrowed may be used. In Table 9, the range of explicitly representable MCS offsets becomes -5 to 7. When the channel estimation performance of the BS or the UE is sufficiently high, and the scheduling of the BS based on the CSI reporting or estimation of the BS does not depart from the required BLER, the size of the required MCS offset may not be large. In this case, when a table using a smaller number of MCS offset bits may be used to reduce DCI overhead. For example, Table 10 or 11 may be used.

**Table 10**

| Index or bit representation | Calculated MCS offset |
|---|---|
| 0 | 0 or lower (MCS offset = 0) |
| 1 | +1 (MCS offset = +1) |
| 2 | +2 ((MCS offset=+2) |
| 3 | +3 or higher (MCS offset ≥ 3) |

**Table 11**

| Index or bit representation | Calculated MCS offset |
|---|---|
| 0 | -3 or lower (MCS offset ≤ -3) |
| 1 | -2 (MCS offset = -2) |
| 2 | -1 (MCS offset = -1) |
| 3 | 0 (MCS offset = 0) |
| 4 | +1 (MCS offset = +1) |
| 5 | +2 (MCS offset = +2) |
| 6 | +3 (MCS offset = +3) |
| 7 | +4 or higher (MCS offset ≥ +4) |

Regardless of whether CSI reporting including the MCS offset is performed to reduce ambiguity between the UE and the BS, a bit space including the MCS offset may be reserved in a UCI bit sequence. For example, when the CSI reporting including the MCS offset is to be transmitted with other UCI, for example, HARQ-ACK, SR, and/or other CSI, the UE may assume that the CSI reporting including the MCS offset is always included to reduce ambiguity and may always include a number-bit (e.g., 1-bit, 2-bit, or 3-bit) UCI bit sequence for representing the MCS offset in CSI reporting. In this case, when the UE fails to receive PDSCH scheduling DCI properly, there may not be a PDSCH reception result corresponding to the CSI reporting including the MCS offset. Alternatively, the UE receives the PDSCH, but the CSI reporting including the MCS offset may not be triggered. To prepare for this case, in some implementations of the present disclosure, as a method of representing an MCS offset (e.g., degree of change in MCS indexes), a reserved entry indicating that MCS offset-based CSI reporting is not triggered or a corresponding PDSCH is not present, for example, an empty entry, or an entry representing that the CSI reporting is not triggered or no received PDSCH may be included in the MCS offset table. The following table illustrates the MCS offset table including reserved entries.

**Table 12**

| **Index or bit representation** | **Calculated MCS offset** |
|---|---|
| 0 | Reserved (Not triggered) |
| 1 | 0 or lower (MCS offset ≤ 0) |
| 2 | +1 (MCS offset = +1) |
| 3 | +2 or higher (MCS offset ≥ +2) |

When CSI reporting is not triggered or there is no received PDSCH related to the CSI reporting, the UE may inform the BS of this fact by reporting the reserved entry included in the MCS offset table. For example, referring to Table 12, when whether to trigger the CSI reporting including the MCS offset is ambiguous between the UE and the BS, the UE may transmit CSI reporting including index 0 as an MCS offset value.

In some implementations, the MCS offset table may include a plurality of reserved entries, and the UE may report one of the plurality of reserved entries to report a more detailed reserved situation to the BS. For example, when the CSI reporting is not triggered, a reserved entry indicating 'Not triggered', and when there is no received PDSCH, the reserved entry indicating 'No received PDSCH' may be reported.

The MCS offset and the MCS (index) index have a discrete integer, and thus when a range of the MCS offset for a certain integer n is represented as being "less than n", "larger than n", "MCS offset < n" or "MCS offset > n", the same effect may be obtained as in the case in which the range of the MCS offset is represented as being "equal to or less than n-1", "greater than or equal to n+1", "MCS offset <= n-1" or "MCS offset >= n+1".

According to some implementations of the present disclosure, even if the CSI reporting including the MCS offset is triggered, when the UE informs the BS of an entry value indicating that the CSI reporting is not reserved or triggered, the BS may recognize that DCI/RNTI is missed. Regardless of whether there is an MCS offset to be reported, one entry value of the MCS offset table is transmitted, and thus the BS may decode a sequence with a fixed length, thereby reducing delta-MCS reception complexity in the BS.

### <Implementation 2-1> MCS offset table adaptation

When Implementation 2 is used, different MCS offset tables may be used according to a used MCS table or target BLER. This is because a level at which modulation and coding between MCS indices are changed is different for each MCS table and a required level of modulation and coding is changed depending on the target BLER. When the MCS offset is calculated, the meaning of the MCS offset value is also different for each MCS table, and thus an MCS index table to be used needs to be determined or defined.

For example, the table and information size of the MCS offset may be determined according to the MCS table configured to the UE. The following is the MCS indices defined in 3GPP TS 38.214.
> MCS index table 1 for PDSCH

| **MCS Index *I_{MCS}*** | **Modulation Order *Qₘ*** | **Target code Rate *R* x [1024]** | **Spectral efficiency** |
|---|---|---|---|
| **0** | 2 | 120 | 0.2344 |
| **1** | 2 | 157 | 0.3066 |
| **2** | 2 | 193 | 0.3770 |
| **3** | 2 | 251 | 0.4902 |
| **4** | 2 | 308 | 0.6016 |
| **5** | 2 | 379 | 0.7402 |
| **6** | 2 | 449 | 0.8770 |
| **7** | 2 | 526 | 1.0273 |
| **8** | 2 | 602 | 1.1758 |
| **9** | 2 | 679 | 1.3262 |
| **10** | 4 | 340 | 1.3281 |
| **11** | 4 | 378 | 1.4766 |
| **12** | 4 | 434 | 1.6953 |
| **13** | 4 | 490 | 1.9141 |
| **14** | 4 | 553 | 2.1602 |
| **15** | 4 | 616 | 2.4063 |
| **16** | 4 | 658 | 2.5703 |
| **17** | 6 | 438 | 2.5664 |
| **18** | 6 | 466 | 2.7305 |
| **19** | 6 | 517 | 3.0293 |
| **20** | 6 | 567 | 3.3223 |
| **21** | 6 | 616 | 3.6094 |
| **22** | 6 | 666 | 3.9023 |
| **23** | 6 | 719 | 4.2129 |
| **24** | 6 | 772 | 4.5234 |
| **25** | 6 | 822 | 4.8164 |
| **26** | 6 | 873 | 5.1152 |
| **27** | 6 | 910 | 5.3320 |
| **28** | 6 | 948 | 5.5547 |
| **29** | 2 | reserved | |
| **30** | 4 | reserved | |
| **31** | 6 | reserved | |

> MCS index table 2 for PDSCH

| **MCS Index *I_{MCS}*** | **Modulation Order *Qₘ*** | **Target code Rate *R* x [1024]** | **Spectral efficiency** |
|---|---|---|---|
| **0** | 2 | 120 | 0.2344 |
| **1** | 2 | 193 | 0.3770 |
| **2** | 2 | 308 | 0.6016 |
| **3** | 2 | 449 | 0.8770 |
| **4** | 2 | 602 | 1.1758 |
| **5** | 4 | 378 | 1.4766 |
| **6** | 4 | 434 | 1.6953 |
| **7** | 4 | 490 | 1.9141 |
| **8** | 4 | 553 | 2.1602 |
| **9** | 4 | 616 | 2.4063 |
| **10** | 4 | 658 | 2.5703 |
| **11** | 6 | 466 | 2.7305 |
| **12** | 6 | 517 | 3.0293 |
| **13** | 6 | 567 | 3.3223 |
| **14** | 6 | 616 | 3.6094 |
| **15** | 6 | 666 | 3.9023 |
| **16** | 6 | 719 | 4.2129 |
| **17** | 6 | 772 | 4.5234 |
| **18** | 6 | 822 | 4.8164 |
| **19** | 6 | 873 | 5.1152 |
| **20** | 8 | 682.5 | 5.3320 |
| **21** | 8 | 711 | 5.5547 |
| **22** | 8 | 754 | 5.8906 |
| **23** | 8 | 797 | 6.2266 |
| **24** | 8 | 841 | 6.5703 |
| **25** | 8 | 885 | 6.9141 |
| **26** | 8 | 916.5 | 7.1602 |
| **27** | 8 | 948 | 7.4063 |
| **28** | 2 | reserved | |
| **29** | 4 | reserved | |
| **30** | 6 | reserved | |
| **31** | 8 | reserved | |

> MCS index table 3 for PDSCH

| **MCS Index *I_{MCS}*** | **Modulation Order *Qₘ*** | **Target code Rate *R* x [1024]** | **Spectral efficiency** |
|---|---|---|---|
| **0** | 2 | 30 | 0.0586 |
| **1** | 2 | 40 | 0.0781 |
| **2** | 2 | 50 | 0.0977 |
| **3** | 2 | 64 | 0.1250 |
| **4** | 2 | 78 | 0.1523 |
| **5** | 2 | 99 | 0.1934 |
| **6** | 2 | 120 | 0.2344 |
| **7** | 2 | 157 | 0.3066 |
| **8** | 2 | 193 | 0.3770 |
| **9** | 2 | 251 | 0.4902 |
| **10** | 2 | 308 | 0.6016 |
| **11** | 2 | 379 | 0.7402 |
| **12** | 2 | 449 | 0.8770 |
| **13** | 2 | 526 | 1.0273 |
| **14** | 2 | 602 | 1.1758 |
| **15** | 4 | 340 | 1.3281 |
| **16** | 4 | 378 | 1.4766 |
| **17** | 4 | 434 | 1.6953 |
| **18** | 4 | 490 | 1.9141 |
| **19** | 4 | 553 | 2.1602 |
| **20** | 4 | 616 | 2.4063 |
| **21** | 6 | 438 | 2.5664 |
| **22** | 6 | 466 | 2.7305 |
| **23** | 6 | 517 | 3.0293 |
| **24** | 6 | 567 | 3.3223 |
| **25** | 6 | 616 | 3.6094 |
| **26** | 6 | 666 | 3.9023 |
| **27** | 6 | 719 | 4.2129 |
| **28** | 6 | 772 | 4.5234 |
| **29** | 2 | reserved | |
| **30** | 4 | reserved | |
| **31** | 6 | reserved | |

Referring to the above tables, when the MCS index table 1 or the MCS index table 2 is used, an MCS offset table having a 2-bit size may be used, and when the MCS index table 3 is used, an MCS offset table having a 3-bit size may be used.

In some implementations, at least one of the following cases may be considered to prepare the case in which a plurality of DCI formats for PDSCH scheduling is configured to the UE and different MCS index tables are configured for respective DCI formats or the case in which the UE is scheduled with a PDSCH while dynamically changing an MCS table through DCI scrambled with an MCS-C-RNTI through CRC.
> In consideration of DCI missing, an MCS offset table based on an MCS index table (e.g., mcs-Table or mcs-TableDCI-1-2 in PDSCH-config)) configured for a certain DCI format (e.g., DCI format 1_1 or 1_2) may always be used. In the existing NR wireless communication system, the UE may determine an MCS index table to be used for each DCI format through a procedure described in Section 5.1.3.1 of 3GPP TS 38.214. To indicate an MCS index table to be used by the UE, the BS may configure the MCS index table to be used through mcs-Table and mcs-TableDCI-1-2 parameters in PDSCH-Config to refer to different MCS index tables for a PDSCH scheduled in DCI format 1_1 or 1_2 or may always schedule a PDSCH by using a DCI format 1_0 using the MCS index table 1. A separate MCS index table may be configured to be used when DCI that is CRC-scrambled with MCS-C-RNTI is scheduled, and a PDSCH may be scheduled through DCI that is CRC-scrambled with MCS-C-RNTI. For example, as in Implementation 1-1, when the UE fails in decoding a transport block included in the received PDSCH and reports the MCS offset, MCS index tables assumed by the UE and the BS may not match each other due to DCI missing. In this case, a certain DCI format (e.g., DCI format 1_1) may be always assumed using a proposed method, and MCS offset-based CSI reporting may be performed using an MCS index table to be used in a PDSCH scheduled in the corresponding DCI format (e.g., determined through Section 5.1.3.1 of 3GPP TS 38.214) and an MCS offset based on the corresponding MCS index table.

When only one of the mcs-Table and the mcs-TableDCI-1-2 is configured in PDSCH-Config, an MCS offset table based on the MCS index table determined with configured parameters may be used.
> In consideraiton of DCI missing, an MCS offset table based on the MCS index table 3 defined in the 3GPP TS 38.214 may always be used.
> To prevent ambiguity of selection of an MCS index table, the BS may schedule only one PDSCH for which the corresponding CSI reporting is triggered, for a PUCCH on which a CSI report including the MCS offset is transmitted. In other words, the UE may not expect that CSI reports or HARQ-ACK transmission(s) related to two or more PDSCH scheduling for triggering the CSI reporting including the MCS offset are performed on one PUCCH.

In the case of performing CSI reporting including an MCS offset based on a PDSCH reception process and results by using Implementation 1 or a similar method, in some implementations of the present disclosure, a PDSCH as a basis of calculation of the MCS offset may be limited to a PDSCH scheduled through the MCS index table determined according to Implementation 2-1.

As described in Implementation 1, MCS offset reporting may be performed by reporting a value calculated from a difference between an MCS index of a TB received from the PDSCH and a largest MCS index that makes a BLER estimated for the TB from the received PDSCH be less than or equal to the BLER target. When the MCS offset-based CSI reporting is based on a certain MCS index table, the received MCS index of the TB and the largest MCS index that makes the BLER estimated for the TB from the received PDSCH is equal to or less than the BLER target may mean MCS indices on the corresponding MCS table. When Implementation 2-1 is used, an MCS index table assumed in the MCS offset-based CSI reporting may be different from an MCS index table used in actual scheduling. In this case, MCS index I_{MCS} of the TB received from a PDSCH as a basis of the MCS offset-based CSI reporting may be assumed through the following method.
> An MCS index having a spectral efficiency value closest to a scheduled MCS value is assumed to be I_{MCS} as a target of calculation of an MCS offset in MCS offset reporting. This may be useful, for example, when an MCS table as a basis of MCS offset reporting is dynamically changed in the case in which a range of spectral efficiency of the MCS table as a basis of MCS offset reporting is not previously known.
> An MCS index having a spectral efficiency value equal to or higher than a scheduled MCS value is assumed to be I_{MCS} as a target of calculation of the MCS offset in the MCS offset reporting. This is useful when a range of spectral efficiency of an MCS table as a basis of MCS offset reporting is wider than a range of spectral efficiency of an MCS table used in scheduling. The corresponding method may be limited and used when the range of spectral efficiency of the MCS table is wider than the range of spectral efficiency of the MCS table used in scheduling.
> An MCS index having a spectral efficiency value equal to or less than a scheduled MCS value may be assumed to be I_{MCS} as a target of calculation of MCS offset in the MCS offset reporting. This may be useful when a range of spectral efficiency of an MCS table as a basis of MCS offset reporting is narrower than a range of spectral efficiency of an MCS table used in scheduling. This may also be useful when the range of the spectral efficiency of the MCS table as a basis of the MCS offset reporting is narrower than the range of the spectral efficiency of the MCS table used in scheduling.
> An MCS index having spectral efficiency closest to a scheduled MCS value from among MCS indices having the same modulation order value is assumed to be I_{MCS} as a target of offset calculation in MCS offset reporting. MCS offset reporting may be performed based on MCS indices having similar characteristics by assuming the same modulation order value.

### <Implementation 3> Multiplexing delta-MCS with HARQ-ACK

When Implementation 1 is used, CSI reporting including the MCS offset may be considered to be performed with transmission of HARQ-ACK. This is because a transmission timing of delta-MCS, that is, the MCS offset is determined during PDSCH scheduling/transmission. In this case, the following method(s) may be considered.
> Considering that a CSI report including an MCS offset may correspond to reception of each PDSCH, the CSI report and an HARQ-ACK bit corresponding to each PDSCH occasion may be concatenated or joint-coded to be transmitted. For example, when an MCS offset based on PDSCH 2 and an HARQ-ACK codebook including HARQ-ACK bits AN1 to AN4 for PDSCH 1 to PDSCH 4 are transmitted together, UCI including related bits is transmitted in the order of AN1, AN2, MCS offset, AN3, and AN4.
   >> To joint-code the HARQ-ACK and the MCS offset, a table exemplified in Implementation 2 may be used. For example, when the MCS offset is 0 or less than 0, the MCS offset may be interpreted as ACK, and when the MCS offset is greater than 0, the MCS offset may be interpreted as NACK.
> Considering that a CSI report including an MCS offset may correspond to PDSCH reception, one MCS offset per HARQ-ACK codebook transmitted on the PUCCH may be reported together. For example, a bit sequence representing an MCS offset may be concatenated with a HARQ-ACK codebook. In this case, the following may be additionally considered.
   >> To represent an MCS offset, the table described in Implementation 2 may be used.
   >> A bit sequence representing the MCS offset may always be transmitted with a HARQ-ACK codebook regardless of whether to perform the CSI reporting. This is to eliminate ambiguity between the UE and the BS, which may occur when DCI triggering CSI reporting misses, according to some implementations of the present disclosure. To this end, whether the UE includes the bit sequence representing the MCS offset in transmission of the HARQ-ACK codebook may be configured via higher layer signaling of the BS. Alternatively, when the UE performs CSI reporting including the MCS offset according to a CSI configuration configured to the UE by the BS or the CSI reporting is to be triggered by the BS, the UE may always transmit the bit sequence representing the MCS offset with the HARQ-ACK codebook.
   >> A PDSCH for MCS offset calculation may include at least one of the followings.
      >>> In the case of Type-1 codebook:
         >>>> The entire PDSCH occasion(s) including the corresponding HARQ-ACK information in the HARQ-ACK codebook may be considered,
         >>>> One or more PDSCHs scheduled by DCI triggering the MCS offset may be based,
         >>>> The latest PDSCH scheduled by DCI triggering the MCS offset may be based,
         >>>> The last received PDSCH may be based,
         >>>> The last successfully received PDSCH may be based, or
         >>>> The last PDSCH that fails to be received may be based.
      >>> In the case of Type-2 codebook:
         >>>> The entire PDSCH occasion(s) including the corresponding HARQ-ACK information in the HARQ-ACK codebook may be considered,
         >>>> MCS offset calculation may be based on a PDSCH mapped to the last downlink assignment index (DAI),
         >>>> MCS offset calculation may be based on the last successfully received PDSCH,
         >>>> MCS offset calculation may be based on the last PDSCH that fails to be received,
         >>>> MCS offset calculation may be based on one or more PDSCHs scheduled by DCI triggering the MCS offset,
         >>>> MCS offset calculation may be based on the latest PDSCH scheduled by DCI triggering the MCS offset,
         >>>> MCS offset calculation may be based on a PDSCH scheduled by DCI triggering the MCS offset and the PDSCHs received thereafter until a CSI reporting timing or a CSI reporting preparation timing in consideration of a CSI processing time.
      >>> When there are multiple PDSCHs that satisfy the conditions, the UE may report the MCS offset based on the latest received PDSCH thereamong.

### <Implementation 4> delta-MCS for PDSCH with multiple transport blocks

When CSI based on a PDSCH reception procedure and result thereof is reported in the form of the MCS offset using Implementation 1 or a similar method, the received PDSCH may deliver a plurality of transport blocks (TBs). In this case, to determine an MCS basis for calculating the MCS offset (e.g., scheduled MCS index and TB size), at least one of the following methods may be considered.

First, to simplify a UE operation, when two or more TBs are scheduled by DCI, an MCS offset may be determined based on an MCS offset of a scheduled first TB (i.e. a TB having a lowest TB index) (i.e., based on the corresponding TB).

As another example, when two or more TBs are scheduled by DCI, an MCS offset may be determined based on an initially transmitted TB that has not been transmitted previously. In this case, when the corresponding plurality of TBs are all initially transmitted TBs or are all retransmitted TBs, another method in Implementation 4 (for example, a method based on the TB with the lowest TB index) may be applied.

As another example, when two or more TBs are scheduled with DCI, an MCS offset may be determined based on a TB having a larger TB size. In this case, when the corresponding plurality of TBs has the same size, other methods (e.g., a method based on a TB having a lowest TB index) in Implementation 4 may be applied.

As another example, when two or more TBs are scheduled by DCI, the UE may calculate an MCS offset based on all of the two TBs and report the most significant value. The significant value may be determined by independent implementation of the UE, or based on a TB resulting in a greater difference in the scheduled MCS index, that is, having a great absolute value of the MCS offset to report.

As another example, when two or more TBs are scheduled by DCI, the UE may use a TB that fails to be transmitted from among the two TBs (i.e., TB in which HARQ-ACK response is NACK). When all of the two TBs fail to be transmitted, the above other methods (e.g., a method based on a TB having the lowest TB index) may be applied.

To prepare the case in which the UE may randomly determine one of two or more TBs, the MCS offset may be reported with the TB index.

The method proposed in Implementation 4 may be described assuming that one DCI is used when a plurality of TBs is transmitted via one PDSCH, but may also be used when a plurality of DCIs are used to transmit a plurality of TBs via a plurality of PDSCHs. In other words, to calculate an MCS offset, the method may also be applied to any case in which a plurality of TBs is considered. In this case, a TB sequence number on DCI may be replaced by a sequence number of a PDSCH including a TB in time.

According to some implementations of the present disclosure, the UE may perform CSI reporting without separate CSI measurement and the BS may also obtain CSI of the UE without separate CSI-RS transmission.

In some implementations of the present disclosure, the BS may assume the same UCI bit number when the MCS entry is or is not reported with other CSI by including a reserved entry representing that MCS index offset-based CSI is not triggered or a corresponding PDSCH is not present, an empty entry, or an entry representing `not triggered' or 'no received PDSCH' in the MCS offset table representing the MCS index offset. Through this, it may be possible to prevent the UE and BS from making different determinations about triggering MCS index reporting.

The UE may perform operations according to some implementations of the present disclosure in association with transmission of CSI report. The UE may include at least one transceiver; at least one processor; and at least one computer memory operably connectable to the at least one processor and storing instructions that, when executed, cause the at least one processor to perform operations according to some implementations of the present disclosure. A processing device for a UE may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure. In the UE, the processing device, the computerreadable (non-volatile) storage medium, and/or the computer program product, the operations include receiving a higher layer parameter configuration related to CSI reporting, receiving scheduling information including resource allocation information for a PDSCH, receiving the PDSCH based on the scheduling information, determining an uplink resource for the CSI report based on the higher layer parameter configuration and the scheduling information, and transmitting the CSI report in the uplink resource. Transmitting the CSI report in the uplink resource may include transmitting the CSI report including one of a plurality of entry values based on i) the PDSCH and ii) an MCS offset table including the plurality of entry values. The plurality of entry values may include first values representing a plurality of MCS offset values and a second value that is reserved without being mapped to any MCS offset.

In some implementations, the operations may further include determining whether the MCS offset is included in the CSI report. Based on a determination that the MCS offset is included in the CSI report, the CSI report may include one of the first values as the entry value, and based on a determination that the MCS offset is not included in the CSI reporting, the CSI reporting may include the second value as the entry value.

In some implementations, determining whether the MCS offset is included in the CSI report may include determining whether the entry value is included in the CSI report based on an RNTI related to the scheduling information.

In some implementations, determining whether the MCS offset is included in the CSI report may include determining whether the entry value is included in the CSI report based on decoding failure or success for the PDSCH.

In some implementations, the method may further include determining an MCS offset based on the PDSCH and an MCS index table for the PDSCH. The MCS offset may be calculated from a difference between a largest MCS index I_{MCS,target} that makes a BLER estimated for a transport block from the PDSCH be equal to or less than a BLER target and an MCS index I_{MCS} of the transport block included in the PDSCH.

In some implementations, the MCS index table may be predetermined for a downlink control information format related to the scheduling information.

The BS may perform operations according to some implementations of the present disclosure in association with reception of CSI report. The BS may include at least one transceiver; at least one processor; and at least one computer memory operably connectable to the at least one processor and storing instructions that, when executed, cause the at least one processor to perform operations according to some implementations of the present disclosure. A processing device for a BS may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure. In the BS, the processing device, the computerreadable (non-volatile) storage medium, and/or the computer program product, the operations include receiving a higher layer parameter configuration related to CSI reporting, transmitting scheduling information including resource allocation information for a PDSCH, transmitting the PDSCH based on the scheduling information, determining an uplink resource for the CSI report based on the higher layer parameter configuration and the scheduling information, and receiving the CSI report in the uplink resource. The CSI report may include one of the plurality of entry values based on i) the PDSCH and ii) an MCS offset table including the plurality of entry values. The plurality of entry values may include first values representing a plurality of MCS offset values and a second value that is reserved without being mapped to any MCS offset.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

### INDUSTRIAL APPLICABILITY

The implementations of the present disclosure may be used in a BS, a UE, or other equipment in a wireless communication system.

## Claims

1. A method of transmitting a channel state information (CSI) report by a user equipment (UE) in a wireless communication system, the method comprising:
receiving a higher layer parameter configuration related to CSI reporting;
receiving scheduling information including resource allocation information for a physical downlink shared channel (PDSCH);
receiving the PDSCH based on the scheduling information;
determining an uplink resource for the CSI report based on the higher layer parameter configuration and the scheduling information; and
transmitting the CSI report in the uplink resource,
wherein transmitting the CSI report in the uplink resource includes transmitting the CSI report including one of a plurality of entry values based on i) the PDSCH and ii) a modulation coding scheme (MCS) offset table including the plurality of entry values, and
wherein the plurality of entry values includes first values representing a plurality of MCS offset values and a second value that is reserved without being mapped to any MCS offset.

2. The method of claim 1, further comprising:
determining whether an MCS offset is included in the CSI report,
wherein, based on a determination that the MCS offset is included in the CSI report, the CSI report includes one of the first values as the entry value, and
wherein, based on a determination that the MCS offset is not included in the CSI report, the CSI report includes the second value as the entry value.

3. The method of claim 2, wherein determining whether the MCS offset is included in the CSI report includes determining whether the entry value is included in the CSI report based on a radio network temporary identifier (RNTI) related to the scheduling information.

4. The method of claim 2, wherein determining whether the MCS offset is included in the CSI report includes determining whether the entry value is included in the CSI report based on decoding failure or success for the PDSCH.

5. The method of claim 1, further comprising:
determining an MCS offset based on the PDSCH and an MCS index table for the PDSCH,
wherein the MCS offset is calculated from a difference between a largest MCS index I_{MCS,target} that makes a block error ratio (BLER) estimated for a transport block from the PDSCH to equal to or less than a BLER target and an MCS index I_{MCS} of the transport block included in the PDSCH.

6. The method of claim 5, wherein the MCS index table is predetermined for a downlink control information format related to the scheduling information.

7. A user equipment (UE) for transmitting a channel state information (CSI) report in a wireless communication system, the UE comprising:
at least one transceiver;
at least one processor; and
at least one computer memory operatively connected to the at least one processor and configured to store instructions that when executed causes the at least one processor to perform operations including:
receiving a higher layer parameter configuration related to CSI reporting;
receiving scheduling information including resource allocation information for a physical downlink shared channel (PDSCH);
receiving the PDSCH based on the scheduling information;
determining an uplink resource for the CSI report based on the higher layer parameter configuration and the scheduling information; and
transmitting the CSI report in the uplink resource,
wherein transmitting the CSI report in the uplink resource includes transmitting the CSI report including one of a plurality of entry values based on i) the PDSCH and ii) a modulation coding scheme (MCS) offset table including the plurality of entry values, and
wherein the plurality of entry values includes first values representing a plurality of MCS offset values and a second value that is reserved without being mapped to any MCS offset.

8. A processing device in a wireless communication system, the processing device comprising:
at least one processor; and
at least one computer memory operatively connected to the at least one processor and configured to store instructions that when executed causes the at least one processor to perform operations including:
receiving a higher layer parameter configuration related to channel state information (CSI) reporting;
receiving scheduling information including resource allocation information for a physical downlink shared channel (PDSCH);
receiving the PDSCH based on the scheduling information;
determining an uplink resource for the CSI report based on the higher layer parameter configuration and the scheduling information; and
transmitting the CSI report in the uplink resource,
wherein transmitting the CSI report in the uplink resource includes transmitting one of a plurality of entry values through the CSI report based on i) the PDSCH and ii) a modulation coding scheme (MCS) offset table including the plurality of entry values, and
wherein the plurality of entry values includes first values representing a plurality of MCS offset values and a second value that is reserved without being mapped to any MCS offset.

9. A computer readable storage medium for storing at least one program including instructions that when executed causes the at least one processor to perform operations including:
receiving a higher layer parameter configuration related to channel state information (CSI) reporting;
receiving scheduling information including resource allocation information for a physical downlink shared channel (PDSCH);
receiving the PDSCH based on the scheduling information;
determining an uplink resource for the CSI report based on the higher layer parameter configuration and the scheduling information; and
transmitting the CSI report in the uplink resource,
wherein transmitting the CSI report in the uplink resource includes transmitting the CSI report including one of a plurality of entry values based on i) the PDSCH and ii) a modulation coding scheme (MCS) offset table including the plurality of entry values, and
wherein the plurality of entry values includes first values representing a plurality of MCS offset values and a second value that is reserved without being mapped to any MCS offset.

10. A method of receiving a channel state information (CSI) report by a base station (BS) in a wireless communication system, the method comprising:
transmitting a higher layer parameter configuration related to CSI reporting;
transmitting scheduling information including resource allocation information for a physical downlink shared channel (PDSCH);
transmitting the PDSCH based on the scheduling information;
determining an uplink resource for the CSI report based on the higher layer parameter configuration and the scheduling information; and
receiving the CSI report in the uplink resource,
wherein the CSI report includes one of the plurality of entry values based on i) the PDSCH and ii) a modulation coding scheme (MCS) offset table including the plurality of entry values, and
wherein the plurality of entry values includes first values representing a plurality of MCS offset values and a second value that is reserved without being mapped to any MCS offset.

11. A base station (BS) for receiving a channel state information (CSI) report in a wireless communication system, the BS comprising:
at least one transceiver;
at least one processor; and
at least one computer memory operatively connected to the at least one processor and configured to store instructions that when executed causes the at least one processor to perform operations including:
transmitting a higher layer parameter configuration related to CSI reporting;
transmitting scheduling information including resource allocation information for a physical downlink shared channel (PDSCH);
transmitting the PDSCH based on the scheduling information;
determining an uplink resource for the CSI report based on the higher layer parameter configuration and the scheduling information; and
receiving the CSI report in the uplink resource,
wherein the CSI report includes one of the plurality of entry values based on i) the PDSCH and ii) a modulation coding scheme (MCS) offset table including the plurality of entry values, and
wherein the plurality of entry values includes first values representing a plurality of MCS offset values and a second value that is reserved without being mapped to any MCS offset.
